# EUROPÄISCHE PATENTSCHRIFT

(11) **EP 4 104 669 B1**
(45) Veröffentlichungstag und Bekanntmachung des Hinweises auf die Patenterteilung: **12.11.2025**
(21) Anmeldenummer: 22000160.6
(22) Anmeldetag: 15.06.2022
(51) Int. Cl.: A01D 87/12, A01F 29/00

(54) **BALLENAUFLÖSER UND BALLENAUFLÖSEVERFAHREN**
BALE BREAKER AND BALE BREAKING METHOD
DÉROULEUR DE BALLES ET PROCÉDÉ DE DÉROULAGE DE BALLES

(30) Priorität: 15.06.2021 DE 202021002059 U
(43) Veröffentlichungstag der Anmeldung: 21.12.2022
(73) Patentinhaber: Heubatec GmbH, 04317 Leipzig (DE)
(72) Erfinder: Elsner, Frank, 33649 Bielefeld (DE)
(74) Vertreter: Reichert & Lindner Partnerschaft Patentanwälte

(56) Entgegenhaltungen:
- EP-A1- 1 914 344
- EP-A1- 3 078 260
- DE-A1- 19 938 090
- US-A1- 2019 373 919
- US-B2- 10 647 463
- US-B2- 10 893 645
- US-B2- 8 769 801

## Beschreibung

Die vorliegende Erfindung betrifft einen Ballenauflöser nach dem Oberbegriff des Anspruchs 1 sowie ein Ballenauflöseverfahren nach dem Oberbegriff des Anspruchs 8.

Die Erfindung betrifft oder ist somit ein technisches Gerät aus dem Bereich insbesondere der Agrartechnik, konkret dem Bereich der Futtertechnik bzw. der Stalltechnik, und verrichtet oder unterstützt alternativ oder in Kombination folgende Hauptaufgaben:
1. Ballen aus Heu, Stroh und dergleichen aufzulösen, damit das Material des Ballens als Futter oder Einstreu für die Tierhaltung von z.B. Pferden verwendet werden kann, oder
2. Ballen aus Heu, Stroh und dergleichen aufzulösen, damit das Material des Ballens beispielsweise einer Verbrennungseinrichtung zur Energie- oder Wärmeerzeugung oder einer anderen Verwendung zugeführt werden kann.

Insbesondere liegt der vorliegenden Erfindung ein Ballenauflöser derselben Anmelderin gemäß der DE 20 2016 008 248 U1, die aus der EP 3 078 260 A1 hervorgegangen ist, sowie ein Ballenauflöser derselben Anmelderin gemäß der EP16000806.6, die aus der WO2019/185078 hervorgegangen ist, zugrunde.

Weitere Veröffentlichungen zur Basistechnologie sind die DE 195 10 215 A1, DT 25 35 204 A1, DE 27 15 269 A1 und DE 33 37 390 C1.

Die EP1914344A1 offenbart eine Pressballenauflösemaschine mit parallel zueinander angeordneten Abstreifwellen, die rechtwinklig zu einer die Pressballen fördernden Fördereinrichtung ausgerichtet sind. Schächte leiten das Fasergut der Ballen in einen Austragskanal ab, wo es durch mit Zähnen versehene Abstreifwerkzeuge getrennt wird. Die Werkzeuge überlappen ihre Umfangsbahnen in radialer Richtung über einen Bereich der Zähne. Die Werkzeuge weisen in Achsrichtung einen Abstand auf und sind nach außen hin überlappungsfrei zueinander angeordnet.

Aus der US10647463B2 ist eine Ballenverarbeitungsmaschine bekannt, die eine Umwicklung von einem Ballen entfernt und eine schnelle Ballenverarbeitung ermöglicht. Ein Verfahren zum Entfernen der Bindung vom Ballen umfasst das Stützen des Ballens mit einer Ballenstütze in einer erhöhten Position und das Befestigen der Bindung an einer Bindungseingriffsvorrichtung. Das Verfahren umfasst außerdem das Durchtrennen der Bindung und das Entfernen der Ballenstütze unter dem Ballen, sodass zumindest ein Teil des Ballens durch die Schwerkraft von der Bindung wegfällt, die an der Bindungseingriffsvorrichtung befestigt ist.

Ein Ballenöffner, insbesondere für Stroh, Hanf, Flachs, beinhaltet Rotationsschneider mit Schneidklingen, die am Ende eines Schneidwegs in einen Schneidkörper einfahren, ist in der DE19938090A1 offenbart. Ballen werden durch ein Förderband einem Rotationsschneider zugeführt und geöffnetes Material wird durch ein weiteres Förderband entfernt. Am Ende einer Schneidbahn werden die Schneidklingen zurückgezogen. Die Antriebe verfügen über Lastsensoren, die bei Überlastung durch Faserverstopfungen den Vorschub bzw. die Schneidgeschwindigkeit reduzieren.

In der US2019/0373919A1 ist eine Vorrichtung zur Raufutterverarbeitung offenbart, die eine erste Plattform zum Platzieren einer ersten Raufutterart, einen ersten Schneidmechanismus zum Verarbeiten der ersten Raufutterart, eine erste Kette zum Schneiden der ersten Raufutterart von der ersten Plattform zum ersten Schneidmechanismus; und eine zweite Plattform, einen zweiten Schneidmechanismus und eine zweite Kette zum Durchführen ähnlicher Aufgaben mit einer zweiten Raufutterart umfasst. Die erste und die zweite Kette werden mit unterschiedlicher Geschwindigkeit angetrieben, um ein gleichzeitiges Schneiden der ersten und zweiten Rauhfuttersorte in unterschiedlichen Schnittgrößen zu ermöglichen. Die Vorrichtung umfasst außerdem ein Förderband zum gleichzeitigen Sammeln der ersten Raufutterart und der zweiten Raufutterart nach der jeweiligen Verarbeitung durch den ersten und den zweiten Schneidmechanismus zum effektiven Mischen der beiden Raufutterarten, die jeweils unterschiedlich geschnitten wurden, um ihre optimale Partikelgröße für den Verzehr durch Wiederkäuer zu erhalten.

Bei Ballenauflösern kann es zu Staus, Verstopfungen und ungleichmäßigen oder ungewollten Auflöseergebnissen kommen. Weiterhin sind bekannte Ballenauflöser häufig mechanisch sehr aufwendig, was Kosten, Herstellungsaufwand, Verschleiß, Wartung, und Störanfälligkeit in die Höhe treibt. Die vorliegende Erfindung hat das Ziel, diese Nachteile wenigstens teilweise zu vermeiden oder zumindest zu vermindern.

Zur Erreichung dieses Ziels schafft die Erfindung einen Ballenauflöser nach dem Anspruch 1 sowie einen Ballenauflöser nach dem Anspruch 5. Bevorzugte und vorteilhafte Weiterbildungen davon sind in den abhängigen Ansprüchen angegeben.

Eine Ballenauflöser gemäß der Erfindung für einen Ballen aus Heu, Stroh, Streu und/oder Futter enthält Auflageeinrichtungen für den Ballen und Auflöseeinrichtungen, die ausgelegt sind, um Heu, Stroh, Streu und/oder Futter aus einem auf den Auflageeinrichtungen bereitgestellten Ballen herauszulösen und zu Ausgabeeinrichtungen zu transportieren, die den Auflöseeinrichtungen nachgeschaltet sind, wobei den Auflageeinrichtungen Zufuhreinrichtungen zum Zuführen eines auf den Auflageeinrichtungen bereitgestellten Ballens in einer Zuführrichtung zu den Auflöseeinrichtungen hin zugeordnet sind und wobei ferner Zufuhrantriebseinrichtungen zum Antreiben der Zufuhreinrichtungen und Auflöseantriebseinrichtungen zum Antreiben der Auflöseeinrichtungen vorgesehen sind, wobei den Zufuhrantriebseinrichtungen und/oder den Auflöseantriebseinrichtungen und/oder den Ausgabeeinrichtungen Steuereinrichtungen zugeordnet sind, die ausgelegt sind, die Zufuhrantriebseinrichtungen und/oder die Auflöseantriebseinrichtungen und/oder die Ausgabeeinrichtungen so zu steuern, dass eine Fehlfunktion oder Störung, wie insbesondere ein Stau oder eine Verstopfung durch den Ballen insbesondere an den Auflöseeinrichtungen und/oder den Ausgabeeinrichtungen vermieden oder behoben wird. Zusätzlich ist gemäß der Erfindung vorgesehen, dass die Steuereinrichtungen ausgelegt sind, die Zufuhrantriebseinrichtungen insbesondere in Abhängigkeit von wenigstens einem vorgegebenen Detektionsergebnis von mindestens einem Auflösefunktionssensor und/oder von mindestens einem Ausgabefunktionssensor, das auf eine Fehlfunktion oder Störung oder eine sich anbahnende Fehlfunktion oder Störung durch den Ballen an den Auflöseeinrichtungen oder an den Ausgabeeinrichtungen schließen lässt, so zu steuern, dass der Ballen oder schon zerkleinertes Material zeitweise entgegen der Zuführrichtung von den Auflöseeinrichtungen oder entgegen einer Entstaubungsrichtung weg bewegt wird.

Gemäß einer vorteilhaften und bevorzugten Weiterbildung eines solchen Ballenauflösers kann im Rahmen der Erfindung vorgesehen sein, dass den Steuereinrichtungen mindestens ein Auflösefunktionssensor an den Auflöseantriebseinrichtungen und/oder ein Ausgabefunktionssensor den Ausgabeeinrichtungen zugeordnet ist und die Steuereinrichtungen ausgelegt sind, die Zufuhrantriebseinrichtungen und/oder den Auflöseantriebseinrichtungen in Abhängigkeit von wenigstens einem vorgegebenen Detektionsergebnis des mindestens einen Auflösefunktionssensors und/oder des mindestens einen Ausgabefunktionssensors, das auf eine Fehlfunktion oder Störung oder eine sich anbahnende Fehlfunktion oder Störung durch den Ballen an den Auflöseeinrichtungen oder an den Ausgabeeinrichtungen schließen lässt, so zu steuern, dass der Fehlfunktion oder Störung zweitweise entgegengewirkt wird, wobei ggf. jeder Auflösefunktionssensor und Ausgabefunktionssensor vorzugsweise ein Drehmomentsensor, ein Bewegungssensor, ein Temperatursensor, ein Strom- oder Spannungssensor oder ein Schalter ist.

Weiterhin schafft die Erfindung vorteilhafte und mit Vorzug einzusetzende alternative oder zusätzliche Weiterbildungen des Ballenauflösers, die darin bestehen, dass den Ausgabeeinrichtungen bezogen auf die Zuführrichtung ein Engpass vorgeschaltet ist, der vorzugsweise durch die Auflöseeinrichtungen gebildet oder den Auflöseeinrichtungen zugeordnet und insbesondere vorgeschaltet ist.

Eine weitere vorteilhafte Ausgestaltung der Erfindung besteht darin, dass die Auflöseeinrichtungen Auflockerungseinrichtungen insbesondere ggf. im Bereich des Engpasses zum Zerkleinern von aus dem Ballen ausgelösten Klumpen, Stücken, Brocken oder Placken enthalten.

Es kann ferner mit Vorzug vorgesehen sein, dass die Auflöseeinrichtungen messer-, klingen-, haken-, kamm- oder stabförmige Mitnehmer enthalten, von denen mehrere an einem gemeinsamen stabförmigen Träger angebracht und insbesondere integral ausgebildet sind.

Mit Vorteil kann vorgesehen sein, dass die Ausgabeeinrichtungen Entstaubungseinrichtungen, insbesondere einen Entstaubungskanal enthalten, der bevorzugt an seiner Kanalunterseite zumindest ein Lochblech enthält, durch das unerwünschtes Material, wie Sand, Lös, Lehm etc. abgeschieden wird und in dem ein Austragungsband der Ausgabeeinrichtungen verläuft.

Noch eine weitere vorteilhafte und bevorzugte Ausgestaltung besteht darin, dass ein Austragungsband der Ausgabeeinrichtungen als Mitnehmeinrichtungen neben Mitnahmezinken auch Staubmitnehmer aufweist und bevorzugt den Ausgabeeinrichtungen Einrichtungen zugeordnet sind, mittels denen ein Luftstrom vorzugsweise quer zur Entstaubungsrichtung von einem Austragungsband der Ausgabeeinrichtungen zu dem wenigstens einen Lochblech des Entstaubungskanals erzeugt wird, um Sand, Lös, Lehm etc. aus dem Heu, Stroh, Streu und/oder Futter durch das Lochblech aus dem Entstaubungskanal zu entfernen .

Die Erfindung schafft ferner ein Ballenauflöseverfahren, bei dem ein Ballen aus Heu, Stroh, Streu und/oder Futter auf Auflageeinrichtungen mittels deren von Zufuhrantriebseinrichtungen angetriebenen Zufuhreinrichtungen zu von Auflöseantriebseinrichtungen angetriebenen Auflöseeinrichtungen transportiert wird, die Heu, Stroh, Streu und/oder Futter aus dem Ballen herauslösen und zu Ausgabeeinrichtungen transportieren, wobei die Zufuhrantriebseinrichtungen und/oder die Auflöseantriebseinrichtungen und/oder die Ausgabeeinrichtungen mittels Steuereinrichtungen so gesteuert werden, dass eine Fehlfunktion oder Störung, wie insbesondere ein Stau oder eine Verstopfung durch den Ballen insbesondere an den Auflöseeinrichtungen und/oder den Ausgabeeinrichtungen vermieden oder behoben wird. Zusätzlich ist gemäß der Erfindung vorgesehen, dass die Steuereinrichtungen ausgelegt sind, die Zufuhrantriebseinrichtungen insbesondere in Abhängigkeit von wenigstens einem vorgegebenen Detektionsergebnis von mindestens einem Auflösefunktionssensor und/oder von mindestens einem Ausgabefunktionssensor, das auf eine Fehlfunktion oder Störung oder eine sich anbahnende Fehlfunktion oder Störung durch den Ballen an den Auflöseeinrichtungen oder an den Ausgabeeinrichtungen schließen lässt, so zu steuern, dass der Ballen oder schon zerkleinertes Material zeitweise entgegen der Zuführrichtung von den Auflöseeinrichtungen oder entgegen einer Entstaubungsrichtung weg bewegt wird.

Das erfindungsgemäße Ballenauflöseverfahren kann vorteilhaft und bevorzugt durch verfahrensmäßige Nutzung der vorher beschriebenen weiteren Ausgestaltungen des Ballenauflösers in verschiedenen Varianten selbst weiter ausgestaltet werden.

Noch weitere vorteilhafte und bevorzugte Ausgestaltungen ergeben sich aus der Kombination von einzelnen Ansprüchen, der nachfolgenden Figurenbeschreibung zu einzelnen Ausführungsbeispielen sowie den Figuren der Zeichnung.

Die Erfindung wird anhand von Ausführungsbeispielen nachfolgend unter Bezugnahme auf die Zeichnung lediglich exemplarisch näher erläutert, in der zeigt:
- Fig. 1: in einer perspektivischen schematischen Ansicht ein Ausführungsbeispiel eines Ballenauflösers zur Verdeutlichung der Komponenten einschließlich einer Steuerung,
- Fig. 2: in einer schematischen geöffneten Seitenansicht das Ausführungsbeispiel des Ballenauflösers aus der Fig. 1 bei der Verarbeitung eines Quaderballens,
- Fig. 3: in einer schematischen geöffneten Seitenansicht das Ausführungsbeispiel des Ballenauflösers aus der Fig. 1 bei der Verarbeitung eines Rollenballens,
- Fig. 4: in einer schematischen geöffneten Seitenansicht das Ausführungsbeispiel des Ballenauflösers aus den Fig. 1 und 2 bei der Verarbeitung eines Quaderballens in einem Anfangsstadium der Verarbeitung,
- Fig. 5: in einer schematischen geöffneten Seitenansicht das Ausführungsbeispiel des Ballenauflösers aus den Fig. 1 und 2 bei der Verarbeitung eines Quaderballens in einem gegenüber dem Anfangsstadium in der Fig. 4 fortgeschrittenen Stadium der Verarbeitung,
- Fig. 6: in einer schematischen vergrößerten Seitenansicht eine aus dem Stadium in der Fig. 5 entstandene Störung,
- Fig. 7: in einer schematischen geöffneten Seitenansicht das Ausführungsbeispiel des Ballenauflösers aus den Fig. 1 und 2 bei der Verarbeitung eines Quaderballens in einem gegenüber der in der Fig. 6 veranschaulichten Störung späteren Stadium zur Auflösung der Störung,
- Fig. 8: in einer schematischen vergrößerten Seitenansicht ein Detail der Folge der Auflösung der Störung gemäß der Fig. 7,
- Fig. 9: in einer schematischen Draufsicht ein erstes Ausführungsbeispiel einer Auflösekette als Bestandteil von Auflöseeinrichtungen des Ballenauflösers,
- Fig. 10: in einer schematischen Seitenansicht das erste Ausführungsbeispiel der Auflösekette als Bestandteil von Auflöseeinrichtungen des Ballenauflösers gemäß der Fig. 9,
- Fig. 11: in einer perspektivischen schematischen Ansicht das erste Ausführungsbeispiel der Auflösekette als Bestandteil von Auflöseeinrichtungen des Ballenauflösers gemäß den Fig. 9 und 10,
- Fig. 12: in einer perspektivischen schematischen Ansicht ein zweites Ausführungsbeispiel einer Auflösekette als Bestandteil von Auflöseeinrichtungen des Ballenauflösers,
- Fig. 13: in einer schematischen Seitenansicht ein erstes Ausführungsbeispiel einer Förderkette als Bestandteil von Zufuhreinrichtungen des Ballenauflösers,
- Fig. 14: in einer schematischen vergrößerten, auszugsweisen Seitenansicht das Ausführungsbeispiel der Förderkette als Bestandteil von Zufuhreinrichtungen des Ballenauflösers aus der Fig. 13,
- Fig. 15: in einer perspektivischen schematischen Ansicht ein drittes Ausführungsbeispiel einer Auflösekette als Bestandteil von Auflöseeinrichtungen des Ballenauflösers,
- Fig. 16: in einer perspektivischen schematischen Ansicht ein weiteres Ausführungsbeispiel eines Ballenauflösers zur Verdeutlichung der Komponenten einschließlich einer Steuerung,
- Fig. 17: in einer schematischen geöffneten Seitenansicht das weitere Ausführungsbeispiel des Ballenauflösers aus der Fig. 16,
- Fig. 18: schematisch ein erstes Detail aus der Fig. 16,
- Fig. 19: schematisch ein zweites Detail aus der Fig. 16,
- Fig. 20: schematisch ein drittes Detail aus der Fig. 16,
- Fig. 21: in einer schematischen teilweise geöffneten Frontansicht das weitere Ausführungsbeispiel des Ballenauflösers aus der Fig. 16,
- Fig. 22: schematisch einen Ausgabefunktionssensor aus der Fig. 20 in einer betätigten Stellung,
- Fig. 23: schematisch den Ausgabefunktionssensor aus der Fig. 22 in einer unbetätigten Stellung,
- Fig. 24: schematisch Entstaubungseinrichtungen des Ballenauflösers aus den Fig. 16 und 21,
- Fig. 25: schematisch weitere Details der Entstaubungseinrichtungen aus der Fig. 24,
- Fig. 26: in einer perspektivischen schematischen teilweise geöffneten Ansicht noch ein weiteres Ausführungsbeispiel eines Ballenauflösers zur Verdeutlichung der Komponenten,
- Fig. 27: in einer schematischen ausschnittweisen geöffneten Seitenansicht ein Detail des noch weiteren Ausführungsbeispiels des Ballenauflösers aus der Fig. 26,
- Fig. 28: schematisch ein vergrößertes Detail aus der Fig. 27,
- Fig. 29: in einer perspektivischen schematischen Unteransicht die Auflösekette als Bestandteil von Auflöseeinrichtungen des Ballenauflösers aus der Fig. 26,
- Fig. 30: schematisch einen Ausgabefunktionssensor aus der Fig. 20 in einer betätigten Stellung,
- Fig. 31: schematisch den Ausgabefunktionssensor aus der Fig. 30 in einer unbetätigten Stellung,
- Fig. 32: schematisch Umstände der Betätigung des Ausgabefunktionssensor aus den Fig. 30 und 31, und
- Fig. 33: in einer perspektivischen schematischen Ansicht den Ausgabefunktionssensor aus den Fig. 30, 31 und 32.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Die Erfindung betrifft oder ist somit ein technisches Gerät aus dem Bereich der Agrartechnik, konkret dem Bereich der Futtertechnik bzw. der Stalltechnik, und verrichtet oder unterstützt alternativ oder in Kombination folgende Hauptaufgaben:
1. Ballen aus Heu, Stroh, Streu und/oder Futter und dergleichen aufzulösen, damit das Material des Ballens als Futter oder Einstreu für die Tierhaltung von z.B. Pferden verwendet werden kann, und/oder
2. Ballen aus Heu, Stroh, Streu und/oder Futter und dergleichen aufzulösen, damit das Material des Ballens beispielsweise einer Verbrennungseinrichtung zur Energie- oder Wärmeerzeugung oder einer anderen Verwendung zugeführt werden kann.

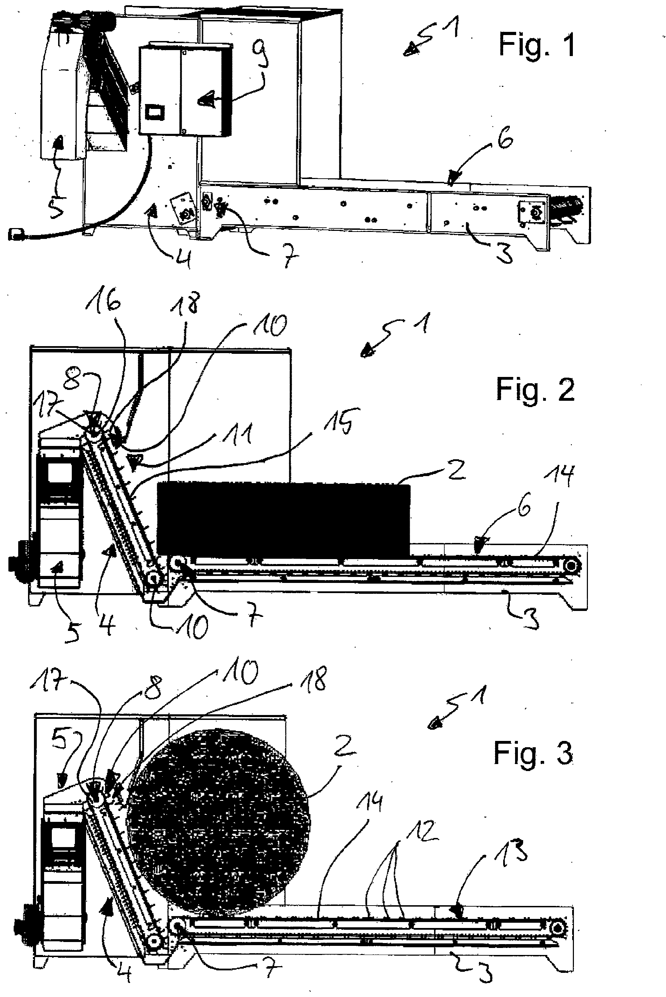

Ein Ballenauflöser 1 für einen Ballen 2 aus Heu, Stroh, Streu und/oder Futter, enthält, wie den Fig. 1 bis 8 deutlich zu entnehmen ist, Auflageeinrichtungen 3 für den Ballen 2 und Auflöseeinrichtungen 4, die ausgelegt sind, um Heu, Stroh, Streu und/oder Futter aus einem auf den Auflageeinrichtungen 3 bereitgestellten Ballen 2 herauszulösen und zu Ausgabeeinrichtungen 5 zu transportieren, die den Auflöseeinrichtungen 4 nachgeschaltet sind. Den Auflageeinrichtungen 3 sind Zufuhreinrichtungen 6 zum Zuführen des auf den Auflageeinrichtungen 3 bereitgestellten Ballens 2 in einer Zuführrichtung Z zu den Auflöseeinrichtungen 4 hin zugeordnet. Weiterhin sind Zufuhrantriebseinrichtungen 7 zum Antreiben der Zufuhreinrichtungen 6 und Auflöseantriebseinrichtungen 8 zum Antreiben der Auflöseeinrichtungen 4 vorgesehen. Den Zufuhrantriebseinrichtungen 7 und/oder den Auflöseantriebseinrichtungen 8 sind Steuereinrichtungen 9 in den Figuren 2 bis 8 nicht gezeigt) zugeordnet, die ausgelegt sind, die Zufuhrantriebseinrichtungen 7 und/oder die Auflöseantriebseinrichtungen 8 so zu steuern, dass eine Fehlfunktion oder Störung, wie insbesondere ein Stau oder eine Verstopfung durch den Ballen 2 insbesondere an den Auflöseeinrichtungen 4 vermieden oder behoben wird.

Bei dem gezeigten Ausführungsbeispiel des Ballenauflösers 1 gemäß den Figuren 1 bis 8 ist vorgesehen, dass den Steuereinrichtungen 9 mindestens ein Auflösefunktionssensor 10 an den Auflöseantriebseinrichtungen 8 oder den Ausgabeeinrichtungen 5 zugeordnet ist und die Steuereinrichtungen 9 die Zufuhrantriebseinrichtungen 7 und/oder den Auflöseantriebseinrichtungen 8 in Abhängigkeit von wenigstens einem vorgegebenen Detektionsergebnis des mindestens einen Auflösefunktionssensors 10, das auf eine Fehlfunktion oder Störung oder eine sich anbahnende Fehlfunktion oder Störung durch den Ballen 2 an den Auflöseeinrichtungen 4 schließen lässt, so steuern, dass der Fehlfunktion oder Störung zweitweise entgegengewirkt wird. Der Auflösefunktionssensor 10 vorzugsweise ist beispiels- oder vorzugsweise ein Drehmomentsensor, ein Bewegungssensor, ein Temperatursensor, ein Strom- oder Spannungssensor.

Insbesondere ist bei dem Ausführungsbeispiel des Ballenauflösers 1 gemäß den Figuren 1 bis 8 vorgesehen, dass die Steuereinrichtungen 9 die Zufuhrantriebseinrichtungen 7 ggf. in Abhängigkeit von wenigstens einem vorgegebenen Detektionsergebnis von dem mindestens einen Auflösefunktionssensor 10, das auf eine Fehlfunktion oder Störung oder eine sich anbahnende Fehlfunktion oder Störung durch den Ballen 2 an den Auflöseeinrichtungen 4 schließen lässt, so steuern, dass der Ballen 2 zeitweise entgegen der Zuführrichtung Z von den Auflöseeinrichtungen 4 weg bewegt wird oder zeitweise in der Zuführrichtung Z langsamer zu den Auflöseeinrichtungen 4 hin bewegt wird.

Ferner ist bei dem Ausführungsbeispiel des Ballenauflösers 1 gemäß den Figuren 1 bis 8 den Ausgabeeinrichtungen 5 bezogen auf die Zuführrichtung Z ein Engpass vorgeschaltet, der vorzugsweise durch die Auflöseeinrichtungen 4 gebildet oder den Auflöseeinrichtungen 4 zugeordnet und insbesondere vorgeschaltet ist.

Daraus lassen sich auch entsprechende Ballenauflöse-, Einstreu- und Futterverteilverfahren ableiten, wobei die Zufuhrantriebseinrichtungen 7 und/oder den Auflöseantriebseinrichtungen 8 so gesteuert werden, dass eine Fehlfunktion oder Störung, wie insbesondere ein Stau oder eine Verstopfung durch den Ballen 2 insbesondere an den Auflöseeinrichtungen 4 vermieden oder behoben wird. Dabei sind die vorgenannten Ausgestaltungen mit den Steuereinrichtungen 9 sowie vorzugsweise dem mindestens einen Auflösefunktionssensor 10 sowie deren Betrieb und Wirkungen verfahrensmäßig eingebunden.

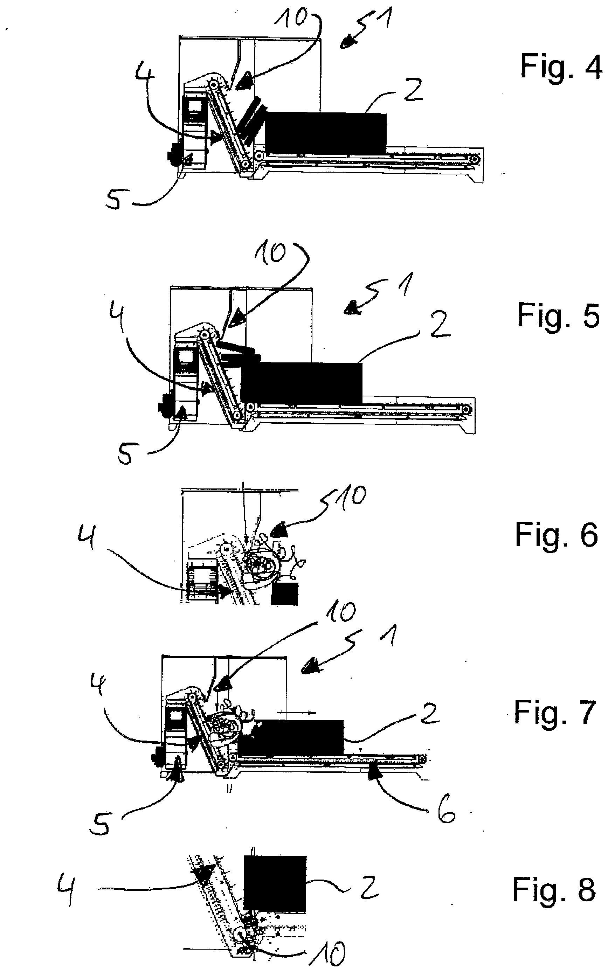

Nachfolgend werden mit weiteren Beispielen und Details der Ballenauflöser 1 sowie seine erfindungsgemäße Ausgestaltung und Funktion als weitere Ausführungsbeispiele insbesondere unter Bezugnahme auf die Fig. 4 bis 8 weiter erläutert.

Der Vollständigkeit halber wird noch darauf hingewiesen, dass der Ballenauflöser 1 in der Fig. 1 mit einer Verkleidung oder einem Gehäuse versehen ist (nicht bezeichnet), die bzw. das in den Fig. 2 bis 8 weggelassen wurde.

Der auf dem den Zufuhreinrichtungen 6, wie beispielsweise einem Förderband 14, liegende Ballen 2 wird mit einer vorgegebenen und insbesondere geeignet eingestellten Geschwindigkeit gegen die Auflöseeinrichtungen 4, die z.B. eine Auflösekette 15 enthalten, gefahren. Auf/An der Auflösekette 15 befinden sich messer-, klingen-, haken-, kamm- oder stabförmige Mitnehmer 12, von denen mehrere an einem gemeinsamen stabförmigen Träger 13 angeordnet und insbesondere integral ausgebildet sind, von denen wiederum eine Mehrzahl in vorzugsweise zumindest etwa gleichen Abständen an der bevorzugt in einem geschlossenen Kreislauf umlaufenden Auflösekette 15 angebracht sind. Die messer-, klingen-, haken-, kamm- oder stabförmige Mitnehmer 12 "greifen" in den von den Zufuhreinrichtungen 6 zu den Auflöseeinrichtungen 4 hin zugeführten Ballen 2 und lösen, in Abhängigkeit der Zufuhr- oder Fördergeschwindigkeit des Förderbandes 13, mehr oder weniger Material, d.h. Heu, Stroh, Streu und/oder Futter, aus dem Ballen 2, lösen also den Ballen 2 auf, und fördern dieses Material in Richtung einer Engstelle 11, wie die Fig. 5 verdeutlicht.

Das Drehmoment eines Antriebsmotors 16 der Auflöseantriebseinrichtungen 8 der Auflösekette 15 wird über einen Frequenzumformer 17 gemessen, der die Funktion eines Auflösefunktionssensors 10 übernimmt. Das Messergebnis von dem Frequenzumformer 17 oder allgemein dem Auflösefunktionssensor 10 wird insbesondere kontinuierlich oder in vorgegebenen oder vorgebbaren Zeitabständen an die Steuereinrichtungen 9 geleitet, wo ein Vergleich dieser Messwerte als Istwerte mit vorbestimmten oder vorbestimmbaren Sollwerten erfolgt, um eine Fehlfunktion oder Störung oder eine sich anbahnende Fehlfunktion oder Störung bei einer vorgegebenen oder vorgebbaren Abweichung oder zeitlichen Änderung zwischen Istwert und Sollwert festzustellen.

Auf diese Weise können die Steuereinrichtungen 9 feststellen, dass z.B. der aus den Messwerten abgeleitete Druck, der von dem zugeführten Ballen 2 auf die Auflösekette 15 ausgeübt wird, den Druck übersteigt, der einem bestimmten Sollwert entspricht, wobei damit apparativ eine Übersteigung eines vorgegebenen definierten Wertes des Drehmoments des Antriebsmotors 13 vorliegt. Die Steuereinrichtungen 9 steuern in einem solchen Fall das Förderband 14 der Zufuhrantriebseinrichtungen 7 rückwärts, d.h. entgegen der Zufuhrrichtung Z, und entlasten dadurch die Auflösekette 15. Sobald das "kritische" Drehmoment wieder unterschritten wird, steuern die Steuereinrichtungen 9 die Zufuhrantriebseinrichtungen 7 wieder zum Betrieb in der Zufuhrrichtung Z, so dass das Förderband 14 wieder in Richtung zu der Auflösekette 15 hin läuft. Während dieser temporären Umkehr der Bewegungsrichtung der Zufuhrantriebseinrichtungen 7 und damit des Förderbandes 14 läuft die Auflösekette 15 der Auflöseeinrichtungen 4 permanent weiter, insbesondere zu dem Engpass 11 und zu den Ausgabeeinrichtungen 5 hin. Alternativ oder zusätzlich kann die Steuerung 9 auch den Antriebsmotor 16 der Auflösekette 15 der Auflöseeinrichtungen 4 anhalten oder rückwärts steuern, um eine Fehlfunktion oder Störung zu beseitigen oder eine sich anbahnende Fehlfunktion oder Störung zu verhindern.

U.a. die Geschwindigkeit der Auflösekette 15 der Auflöseeinrichtungen 4 für die Fördermenge von ausschlaggebender Bedeutung. Dabei bewegt sich diese Geschwindigkeit innerhalb gewisser Toleranzen, die ohne weiteres in Versuchen ohne eigene erfinderische Anforderungen genauer eingegrenzt werden können. Ist die Geschwindigkeit zu hoch, wird das zu fördernde Material, insbesondere Heu, aber auch Stroh, Streu und/oder Futter, in kleine und für die beabsichtigte Verwendung unerwünschte zu kleine Teile zerkleinert/zerrissen. Ist die Geschwindigkeit zu niedrig, werden Klumpen und Brocken etc. aus dem Ballen 2 herausgelöst, d.h. es wird kein "optimal aufgelockertes" Material erhalten. Denkbar sind auch materialabhängige Geschwindigkeiten, z.B. bei Stroh hohe Geschwindigkeiten und bei Heu mittlere Geschwindigkeiten. Erfolgreiche Versuche für alle möglichen Materialien wurden im Mittel mit Geschwindigkeiten im Rahmen von ungefähr 900 mm/s bis etwa 1000 mm/s, insbesondere ca. 942 mm/s durchgeführt, wobei in Abhängigkeit grundsätzlich vom Material und insbesondere auch dessen Zustand eben ohne eigene erfinderische Tätigkeit eine Optimierung erfolgen kann. Diese Geschwindigkeiten der Auflösekette 15 der Auflöseeinrichtungen 4 wurden erfolgreich in eigenen Versuchen mit Geschwindigkeiten des Förderbandes oder der Förderkette 14 der Zufuhreinrichtungen 6 im Bereich von 2 mm/s bis 20 mm/s und insbesondere etwa 8 mm/s bis ca. 12 mm/s, aber auch bei optimalem Material des Ballens ohne Fehlfunktionen oder Störungen mit ungefähr 4,16 mm/s kombiniert. Damit lässt sich z.B. ein quaderförmiger Ballen 2 aus Heu und/oder Stroh mit 2500 mm Länge innerhalb von oder sogar in weniger als zehn Minuten aufzulösen. Um insbesondere Vorwärts/Rückwärtszyklen von Förderband oder Förderkette 14 der Zufuhreinrichtungen 6 und/oder Auflösekette 15 der Auflöseeinrichtungen 4, was materialabhängig auftreten kann, zu kompensieren, können die Geschwindigkeiten entsprechend erhöht werden oder höher sein, was vorzugsweise über die Steuerungseinrichtungen 9 einstellbar ist.

Abhängig von dem z.B. einem definierten Drehmoment, welches auf die Auflösekette 15 wirkt, läuft das Förderband oder die Förderkette 14 der Zufuhreinrichtungen 6 durch die Steuerungseinrichtungen 9 veranlasst rückwärts, um in entsprechenden Situationen die Auflösekette 15 der Auflöseeinrichtungen 4 und damit die Auflöseantriebseinrichtungen 8 zu entlasten, und um gleichzeitig zu verhindern, dass durch zu großen Druck/zu große Zugkräfte der messer-, klingen-, haken-, kamm- oder stabförmigen Mitnehmer 12 der Auflösekette 15 der Auflöseeinrichtungen 4 auf den Ballen 2 insbesondere das Heu oder Stroh in unerwünschter Weise zu sehr zerkleinert wird.

Wird das definierte Drehmoment der Auflösekette 15 der Auflöseeinrichtungen 4 unterschritten, läuft das Förderband oder die Förderkette 14 der Zufuhreinrichtungen 6 durch die Steuerungseinrichtungen 9 veranlasst wieder in Zufuhr- oder Förderrichtung Z gegen die Auflösekette 15 der Auflöseeinrichtungen 4. Bei diesem Vorgang wird das bereits aus dem Ballen 2 herausgelöste Material durch die Auflösekette 15 der Auflöseeinrichtungen 4 in Richtung Engpass, Engstelle oder Engpunkt 11 gefördert. Solches mehr oder weniger großvolumiges, aufgelöstes und aufgelockertes Material wird dann bei dem Eintritt in einen am Engpass oder Engpunkt 11 entstehenden geschlossenen Kanal 18 der Auflöseeinrichtungen 4 wieder verdichtet. Der dabei auftretende Druck übt ebenfalls Kräfte auf die Auflösekette 15 der Auflöseeinrichtungen 4 aus. Beim infolgedessen Überschreiten des definierten Drehmomentes des Antriebsmotors 16 der Auflösekette 15 der Auflöseeinrichtungen 4 fährt durch die Steuerungseinrichtungen 9 zunächst das Förderband 14 der Zufuhreinrichtungen 6 wieder wie oben beschrieben zurück, d.h. entgegen der Zufuhrrichtung Z, und oder wird der Antriebsmotor 16 der Auflösekette 15 der Auflöseeinrichtungen 4 temporär rückwärts gesteuert.

Unter bestimmten, ohne eigene erfinderische Tätigkeit festlegbaren Bedingungen, die abhängig von dem in Echtzeit gemessenem Drehmoment und der Zeit mittels den Steuerungseinrichtungen 9 bestimmt werden können, kann beispielsweise dann auch, wie bereits beschrieben wurde, die Auflösekette 15 der Auflöseeinrichtungen 4 durch die Steuerungseinrichtungen 9 rückwärts, d.h. von den Ausgabeeinrichtungen 5 wegführend, betrieben werden, um wieder das definierte Drehmoment zu unterschreiten. Durch den durch das Zurückfahren des Förderbandes 14 der Zufuhreinrichtungen 6 frei werdenden Raum kann sich das am Engpunkt oder Engpass 11 verdichtete Material entspannen und wird durch das Rückwärtsfahren der Auflösekette 15 der Auflöseeinrichtungen 4 vom Engpunkt oder Engpass 11 weg gefördert oder fällt bei entsprechendem Aufbau einfach nach unten, wie in der Fig. 8 verdeutlicht ist.

Nach dem Unterschreiten des definierten Drehmomentes der Auflösekette 15 der Auflöseeinrichtungen 4 läuft diese veranlasst durch die Steuerungseinrichtungen 9 wieder in Förderrichtung, also zu den Ausgabeeinrichtungen 5 hin, passend zur Zufuhrrichtung Z des Förderbandes 14 der Zufuhreinrichtungen 6. Da die Auflösekette 15 der Auflöseeinrichtungen 4 insbesondere mit deutlich höherer Geschwindigkeit läuft wie das Förderband 14 der Zufuhreinrichtungen 6, sollte die Zeit ausreichen, um das bereits aufgelöste aufgelockerte Material durch den Engpunkt oder Engpass 11 in den geschlossenen Kanal 18 zu fördern, bevor eventuell der Ballen 2 durch das Förderband 14 der Zufuhreinrichtungen 6 wieder gegen die Auflösekette 15 der Auflöseeinrichtungen 4 läuft und auch an dieser Stelle wieder Druck aufbaut.

Die angegebenen Zeiten und Geschwindigkeiten der einzelnen Elemente, was durch die Steuerungseinrichtungen 9 realisiert wird, können ohne eigene erfinderische Tätigkeit in Versuchen optimiert werden. Ein bei den eigenen Versuchen anvisiertes Ziel ist ein Ausstoß von z.B. mindestens 30 kg Heu pro Minute. Ferner soll durch die Vorwärts/Rückwärtsbewegungen der Auflösekette 15 der Auflöseeinrichtungen 4 und des Förderbandes 14 der Zufuhreinrichtungen 6 erreicht werden, dass insbesondere Heu "schonend" aufgelöst wird und weitestgehend in Länge und Struktur erhalten bleibt, was eben durch Ausgestaltung, Einstellung und Betrieb der Steuerungseinrichtungen 9 erreicht werden kann.

Bei dem Ballenauflöser 1 für einen Ballen 2 aus Heu, Stroh, Streu und/oder Futter, mit Auflageeinrichtungen 3 für den Ballen 2 und Auflöseeinrichtungen 4, die ausgelegt sind, um Heu, Stroh, Streu und/oder Futter aus einem auf den Auflageeinrichtungen 3 bereitgestellten Ballen 2 herauszulösen und zu Ausgabeeinrichtungen 5 zu transportieren, die den Auflöseeinrichtungen 4 nachgeschaltet sind, wobei den Auflageeinrichtungen 3 Zufuhreinrichtungen 6 zum Zuführen eines auf den Auflageeinrichtungen 3 bereitgestellten Ballens 2 in einer Zuführrichtung Z zu den Auflöseeinrichtungen 4 zugeordnet sind und wobei ferner Zufuhrantriebseinrichtungen 7 zum Antreiben der Zufuhreinrichtungen 6 und Auflöseantriebseinrichtungen 8 zum Antreiben der Auflöseeinrichtungen 4 vorgesehen sind, kann auch ohne die Steuerungseinrichtungen 9 mit Vorteil vorgesehen sein, dass die Auflöseeinrichtungen 6 messer-, klingen-, haken-, kamm- oder stabförmige Mitnehmer 11 enthalten, von denen mehrere an einem gemeinsamen stabförmigen Träger 12 angebracht und insbesondere integral ausgebildet sind.

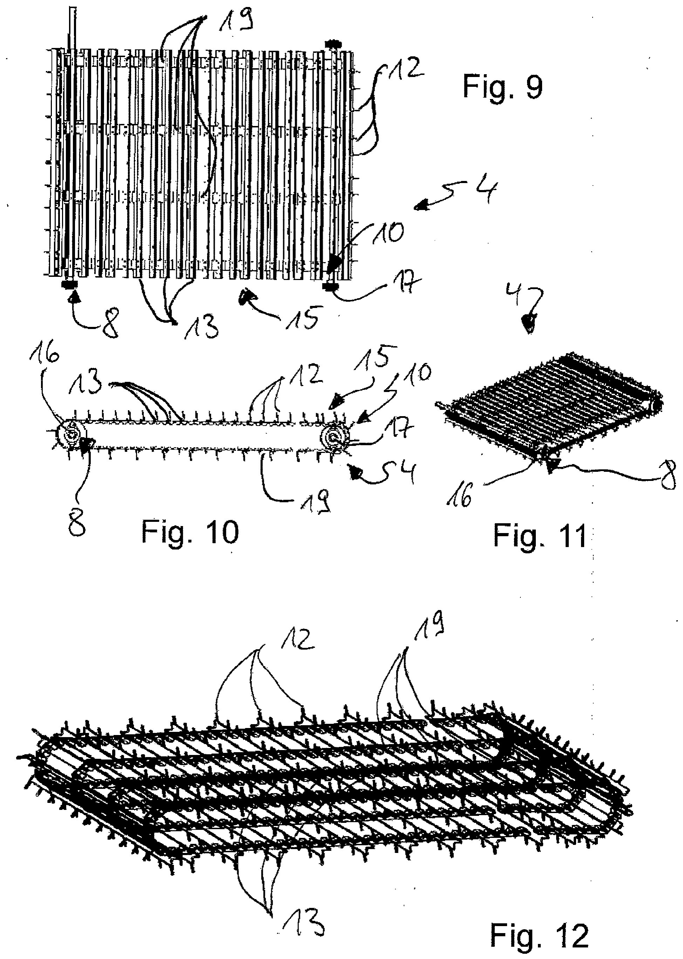

Bevorzugt ist es, wenn die messer-, klingen-, haken-, kamm- oder stabförmigen Mitnehmer 11 integral mit Trägern 12 ausgebildet sind, die wiederum in vorzugsweise annähernd gleichen Abständen an einer umlaufenden Auflösekette 15 der Auflöseeinrichtungen 4 angebracht sind, so dass Kombinationen mit anderen Elementen wie Gewindestangen, Muttern, Schellen und Gurten an der Auflösekette 15 der Auflöseeinrichtungen 4 möglichst oder weitestgehend vermieden werden und womit eine kostengünstige Bauart erreicht ist. Beispiele davon sind in den Fig. 9 bis 12 und 15 verdeutlicht.

Vorzugsweise und mit Vorteil bestehen die messer-, klingen-, haken-, kamm- oder stabförmigen Mitnehmer 11 aus gelaserten und gekanteten Winkeln, die auch gleich die Träger 12 bilden und in deren von der Auflösekette 15 der Auflöseeinrichtungen 4 weg weisenden Schenkeln die Konturen der eigentlichen messer-, klingen-, haken-, kamm- oder stabförmigen Mitnehmer 11 gelasert sind, wie beispielsweise in der Fig. 12 gut zu erkennen ist. Die gelaserten messer-, klingen-, haken-, kamm- oder stabförmigen Mitnehmer 11 samt Träger 12 werden nur noch mit beispielsweise Gurten 19 zu einer Auflösekette 15 der Auflöseeinrichtungen 4 beispielsweise verschraubt oder anders geeignet verbunden.

Fast vom ersten Starten des Ballenauflösers 1 bis auf eine kurze Verzögerung bis die messer-, klingen-, haken-, kamm- oder stabförmigen Mitnehmer 11 gegriffen haben, läuft ein Ballen 2 materialunabhängig mengenmäßig nahezu konstant durch.

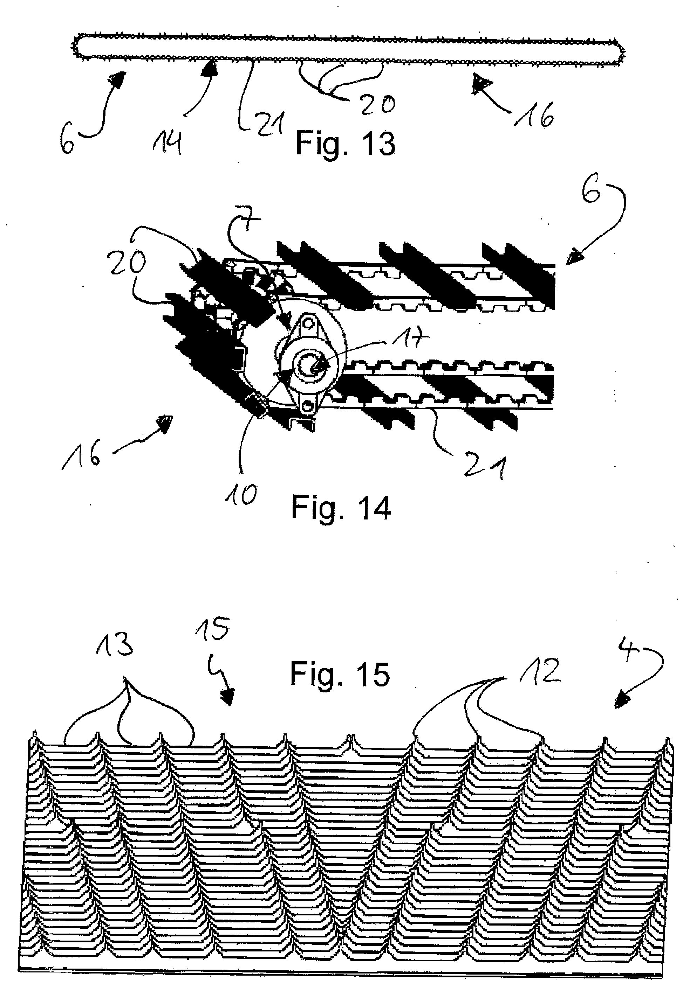

Bevorzugt ergibt die Summe der einzelnen gelaserten messer-, klingen-, haken-, kammoder stabförmigen Mitnehmer 11 an den gelaserten und gekanteten Trägern 12 über die Breite der Auflösekette 15 der Auflöseeinrichtungen 4 von vorn gesehen eine fast geschlossene Front. Dadurch wird der Ballen 2 im Wesentlichen auf seiner kompletten Breite bearbeitet. Ebenfalls möglich sind andere Gestaltungen und Anordnungen der einzelnen gelaserten messer-, klingen-, haken-, kamm- oder stabförmigen Mitnehmer 11 an den gelaserten und gekanteten Trägern 12 über die Breite der Auflösekette 15 der Auflöseeinrichtungen 4, wie z.B. die Fig. 15 verdeutlicht, in der eine in Förderrichtung pfeilförmige Gestaltung und Anordnung der einzelnen gelaserten messer-, klingen-, haken-, kamm- oder stabförmigen Mitnehmer 11 an den gelaserten und gekanteten Trägern 12 im Verlauf der Auflösekette 15 der Auflöseeinrichtungen 4 gezeigt ist. Auch eine zickzackförmige Gestaltung und Anordnung wurde erfolgreich erprobt. Der Abstand der gelaserten und gekanteten Träger 12 mit messer-, klingen-, haken-, kamm- oder stabförmigen Mitnehmern 11 an der Auflösekette 15 der Auflöseeinrichtungen 4, betrachtet in einem ebenen Bereich, beträgt ca. 40 mm bis etwa 120 mm, insbesondere ungefähr 60 mm bis ca. 100 mm und vorzugsweise etwa 80 mm.

Ein Beispiel für eine Förderkette oder ein Förderband 14 der Zufuhreinrichtungen 6 mit U-Profilen 20 an Gurten 21, die beispielsweise hinsichtlich Machart und Material identisch mit den Gurten 19 der Auflösekette 15 der Auflöseeinrichtungen 4 sein können, ist in den Fig. 13 und 14 verdeutlicht. Z.B. aber nicht beschränkend wird für diese U-Profile 20 DIN 1026 C- Stahl mit im Querschnitt 40 mm x 20 mm verwendet.

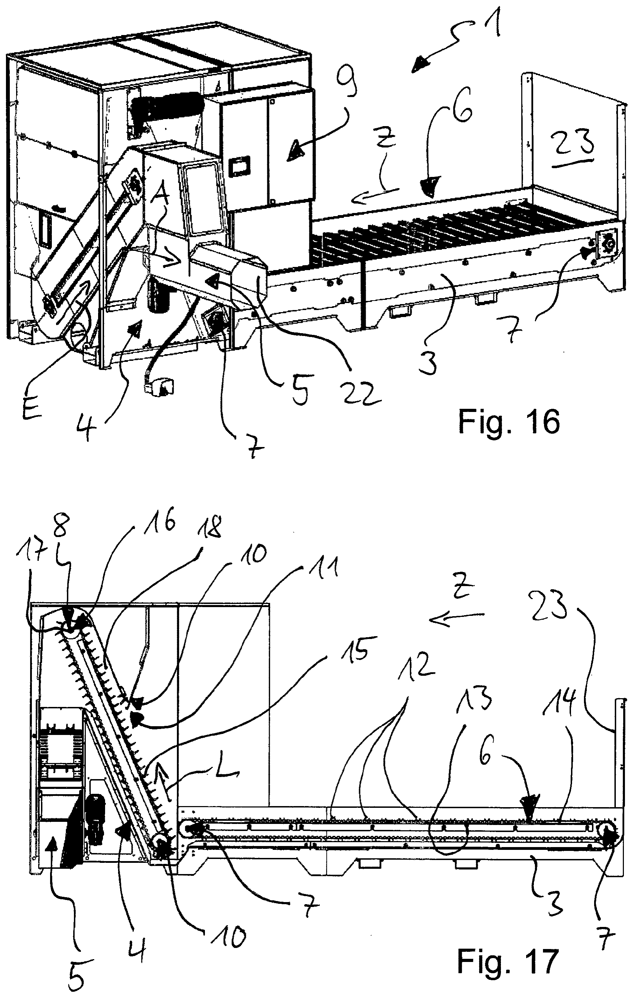

In den Fig. 16 bis 25 wird ein weiteres Ausführungsbeispiel eines Ballenauflösers 1 samt besonderen Ausgestaltungen und Details verdeutlicht. Soweit dieses weitere Ausführungsbeispiel bezüglich Ausgestaltungen gemäß den Fig. 1 bis 15 identisch, ähnlich oder funktionsgleich ausgestaltet ist oder sein kann, wird darauf zur Vermeidung bloßer Wiederholungen nachfolgend verzichtet. Insbesondere auch anhand der Bezugszeichen in den Fig. 16 bis 25 sind die identischen, ähnlichen oder funktionsgleichen Komponenten aus den Fig. 1 bis 15 ohne weiteres zu identifizieren und dem Fachmann auch ohne Wiederholung von entsprechenden Beschreibungen zu den Fig. 1 bis 15 ohne weiteres verständlich, worauf für die Fig. 16 bis 25 hiermit explizit entsprechend und insbesondere mit fachmännischem Verständnis verwiesen wird.

Die Abbildungen des weiteren Ausführungsbeispiels des Ballenauflösers 1 in den Fig. 16 und 17 sind bis auf eine zumindest im wesentlichen horizontal verlaufenden Ausgeber 22 der Ausgabeeinrichtungen 5 in der Fig. 16 sowie dem fehlenden Ballen 2, aber einer zusätzlichen Endwand 23 an den Zufuhreinrichtungen 6 am gegenüber den Auflöseeinrichtungen 4 anderen Ende, um ein Herunterfallen eines Ballens 2 oder von Heu, Stroh, Streu und/oder Futter zu vermeiden, weitgehend identisch mit den Darstellungen in den Fig. 1 bzw. 2 und 3.

In den Fig. 16 und 17 sind ferner die Zuführrichtung Z, die Auslöserichtung L, eine Entstaubungsrichtung E und die Ausgaberichtung A mit entsprechend gekennzeichneten Pfeilen dargestellt.

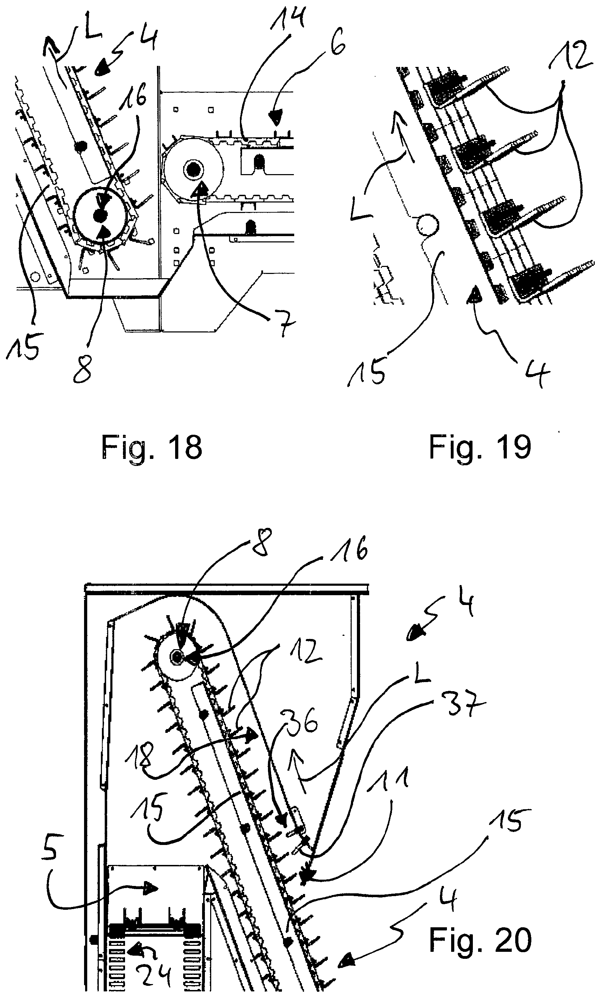

Die Fig. 18 zeigt schematisch im Detail aus der Fig. 16 die Schnittstelle zwischen dem Förderband 14 der Zufuhreinrichtungen 6 und der Auflösekette 15 der Auflöseeinrichtungen 4. In der Fig. 19 sind schematisch im Detail die messer-, klingen-, haken-, kamm- oder stabförmigen Mitnehmer 12 der Auflösekette 15 der Auflöseeinrichtungen 4 bei diesem weiteren Ausführungsbeispiel gezeigt. Das der Schnittstelle zwischen dem Förderband 14 der Zufuhreinrichtungen 6 und der Auflösekette 15 der Auflöseeinrichtungen 4 entgegengesetzte obere Ende der Auflösekette 15 der Auflöseeinrichtungen 4 ist in der Fig. 20 mit dort angeordneten Komponenten schematisch verdeutlicht, deren Erklärungen durch vergleichende Betrachtungen mit den Fig. 1 bis 15 und den zugehörigen Beschreibungen ohne weiteres erkennbar und verständlich sind.

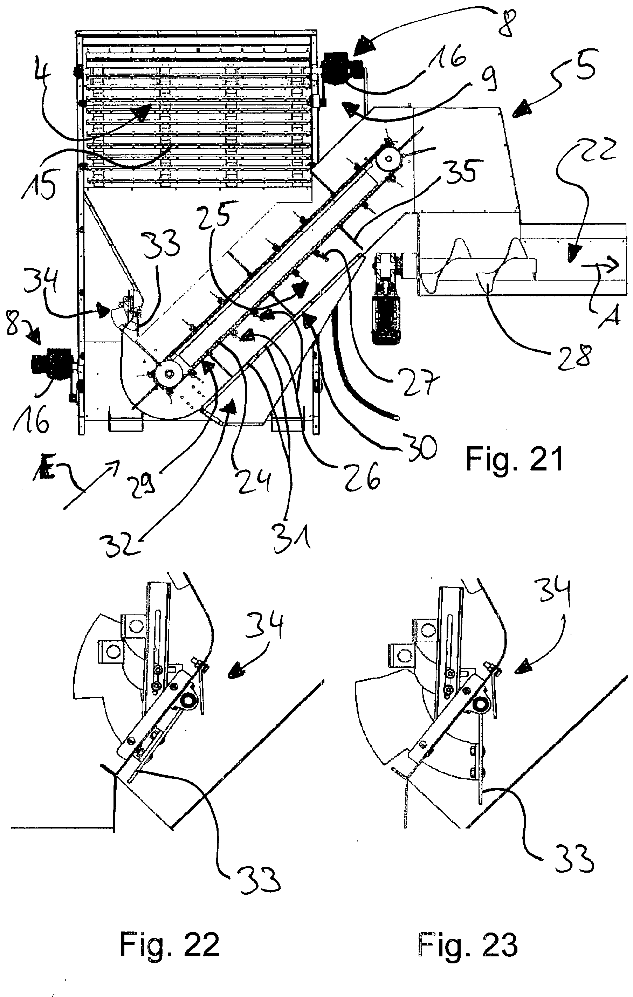

Zwar auch bei dem Ausführungsbeispiel gemäß den Fig. 1 bis 8 vorhanden, wird aber wegen besonderen Ausgestaltungen hier im Zusammenhang mit dem weiteren Ausführungsbeispiel gemäß den Fig. 16 bis 25 näher auf ein Austragungsband 24 der Ausgabeeinrichtungen 5 eingegangen. Die Anordnung dieses Austragungsbandes 24 ist klar erkennbar in der Fig. 21 zu erkennen. Wie die Auflösekette 15 der Auflöseeinrichtungen 4 verläuft auch das Austragungsband 24 der Ausgabeeinrichtungen 5 schräg von unten nach oben. Jedoch wird das aus dem Ballen 2 herausgelöste Heu, Stroh, Streu und/oder Futter nicht wie bei der Auflösekette 15 der Auflöseeinrichtungen 4 oben auf der Auflösekette 15 be-/gefördert, sondern innerhalb eines Entstaubungskanals 25 von Mitnahmeeinrichtungen 26, wie z.B. Mitnahmezinken 27 an dem Austragungsband 24 unterhalb des letzteren aufwärts geschoben, bis es am oberen Ende des Austragungsbandes 24 auf eine Austragsschnecke 28 fällt, die in einem zumindest im wesentlichen horizontalen und rohrförmigen Ausgeber 22 angeordnet ist und ebenso verläuft sowie das nun aufgelockerte und, wie nachfolgend noch erläutert wird, entstaubte Heu, Stroh, Streu und/oder Futter am offenen Ende des Ausgebers 22 ausgibt.

An der in der Fig. 18 vergrößert im Detail schematisch gezeigten Schnittstelle zwischen dem Förderband 14 der Zufuhreinrichtungen 6 und der Auflösekette 15 der Auflöseeinrichtungen 4 landet neben aus dem Ballen 2 herausgelösten Heu, Stroh, Streu und/oder Futter auch in dem Ballen 2 unweigerlich enthaltenes Material in Form von Sand, Lös, Lehm etc. Dieses Material ist in dem letztlich auszugebenden Heu-, Stroh-, Streu- und/oder Futter-Produkt zweckbedingt unerwünscht und führt auch zu einer unerwünschten Luftverschmutzung, wenn es herumfliegt. Nachdem das Heu, Stroh, Streu und/oder Futter samt Sand, Lös, Lehm etc. vom oberen Ende der Auflösekette 15 der Auflöseeinrichtungen 4 vor oder auf das darunter liegende untere Ende des Austragungsbandes 24 gefallen ist, wird es von dessen Mitnahmezinken 27 ergriffen und vom Austragungsband 24 nach oben transportiert, bis es am oberen Ende des letzteren auf die Austragsschnecke 28 fällt und von dieser im Ausgeber zu dessen offenen Ende hin ausgegeben wird.

Das Austragungsband 24 läuft in einem Entstaubungskanal 25, wie es durch den Pfeil der Entstaubungsrichtung E verdeutlicht ist. D.h., dass sich die Unterseite 29 des Austragungsbandes 24 von unten nach oben bewegt. Dadurch wird das Heu, Stroh, Streu und/oder Futter samt Sand, Lös, Lehm etc. von den Mitnahmezinken 27 des Austragungsbandes 24 über eine Kanalunterseite 30 des Entstaubungskanals 25 geschoben. Diese Kanalunterseite 30 des Entstaubungskanals 25 enthält oder ist gebildet aus Lochbleche(n) 31, durch deren Löcher (nicht dargestellt) Sand, Lös, Lehm etc. hindurch fällt und vorzugsweise sogar abgesaugt wird. Vorteilhafterweise, vor allem, um zu verhindern, dass Sand, Lös, Lehm etc. in die Umgebungsluft aufgewirbelt wird und auch dass bei der vorzugsweisen Absaugung keine "Falschluft" die Absaugströmung beeinträchtigt, ist das Austragungsband in dem geschlossenen Entstaubungskanal 25 angeordnet. Somit wird durch die "unübliche" Laufrichtung des Austragungsbandes 24 und dem dadurch realisierten Transport von Heu, Stroh, Streu und/oder Futter samt Sand, Lös, Lehm etc. eben genau das unerwünschte Material in Form von Sand, Lös, Lehm etc. abgetrennt. Dadurch, dass dies in dem geschlossenen Entstaubungskanal 25 erfolgt, wird ein Austritt von Sand, Lös, Lehm etc. in die Umgebungsluft wirksam verhindert. Das so abgeschiedene unerwünschte Material in Form von Sand, Lös, Lehm etc. kann dann leicht in einem Sammelbehälter oder Staubbehälter 32 gesammelt und kann, wenn dieser einen vorgegebenen Füllstand erreicht hat, einer eigenen umweltgerechten Verwendung zugeführt werden, wie z.B. als Pflanzerde.

Um zu vermeiden, dass es beim Austragungsband 24 im Entstaubungskanal 25 dazu kommt, dass sich Heu, Stroh, Streu und/oder Futter samt Sand, Lös, Lehm etc. schoppen und der Entstaubungskanal 25 verstopft sowie die Austragsförderung behindert wird, ist vorteilhafterweise ein Austragsschalter 33 dem unteren Ende des Austragungsbandes 24 zugeordnet. Dies ist eine einfache mechanische Lösung zur Verhinderung einer Verstopfung oder Behinderung des Austrags in dem Entstaubungskanal 25. Ein solcher Austragsschalter 33, der ein Beispiel für allgemein einen Ausgabefunktionssensor 34 ist, ist in der Fig. 22 schematisch in einer betätigten Stellung und in der Fig. 23 in einer unbetätigten Stellung gezeigt. Sowohl die Stellungen "betätigt" und "unbetätigt" des in den Fig. 22 und 23, wobei der Schalter auch schon in der Fig. 21 dargestellt ist, als auch andere Sensoren zum Feststellen oder Indizieren einer Funktionshemmung oder -störung des Austragungsbandes 24 im Entstaubungskanal 25 und damit der Ausgabe liegen im Ermessen des Fachmanns, für den anhand der hier offenbarten Version einer Detektion einer Funktionshemmung oder -störung des Austragungsbandes 24 im Entstaubungskanal 25 dieser vorteilhafte Aspekt der vorliegenden Erfindung ausreichend klar ist.

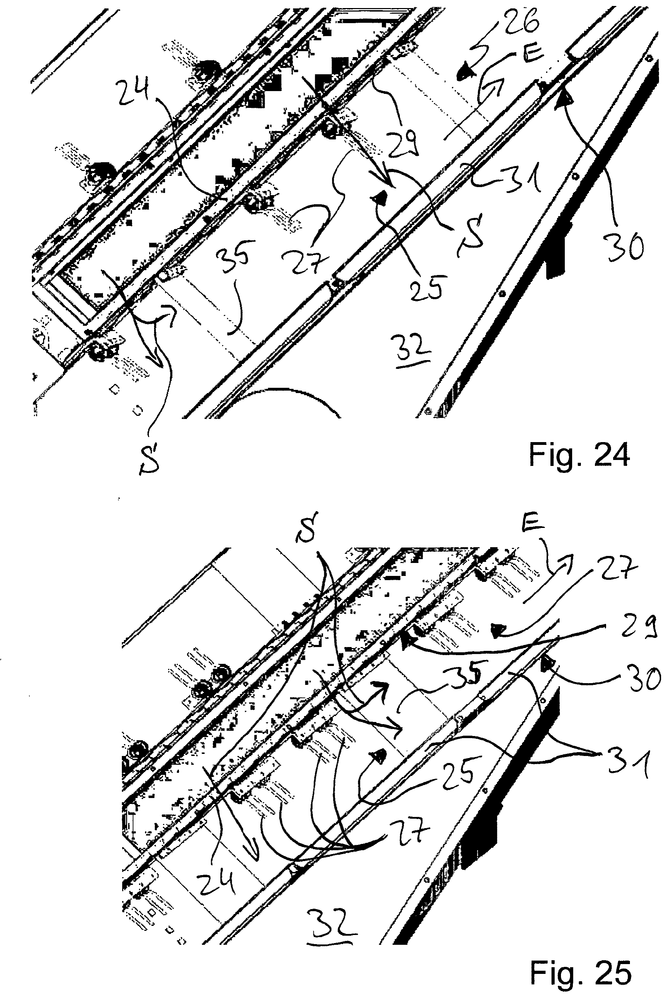

Der Austragsschalter 33 des Austragungsbandes 24 verhindert eine Überfüllung des letzteren und des Entstaubungskanals 25 und damit eine Verdichtung des geförderten Materials, d.h. Heu, Stroh, Streu und/oder Futter samt anfänglich Sand, Lös, Lehm etc. Es wird durch den Austragsschalter 33 oder allgemein einen geeigneten Ausgabefunktionssensor 34 dafür gesorgt, dass Heu, Stroh, Streu und/oder Futter samt anfänglich Sand, Lös, Lehm etc. ausreichend locker im Entstaubungskanal 25 durch das Austragungsband 24 über die Lochbleche 31 oder allgemein Abscheidungseinrichtungen schräg von unten nach oben transportiert wird und in den Sammelbehälter oder Staubbehälter 32 fällt oder sogar gesaugt wird. Feinstaub, d.h. sehr feiner Staub, der ansonsten Dunstglocke die Umgebungsluft verseucht, kann somit optimal vermieden und ggf. abgesaugt werden. Details dazu sind schematisch auch in den Fig. 24 und 25 verdeutlicht.

Über den Entstaubungskanal 25, der ggf. auch quasi als Absaughaube fungiert, wird bei optimierter Ausgestaltung also der Feinstaub aus dem lockeren Heu, Stroh, Streu und/oder Futter samt anfänglich Sand, Lös, Lehm etc. effektiv abgesaugt. Durch geeignete Zuluftöffnungen (nicht dargestellt) kann saubere Luft durch das Heu/Stroh nachströmen und den Absaugeffekt begünstigen sowie Falschluft vermieden werden. Die für die Absaugung benötigte Zuluft wird mit Vorteil als Luftstrom durch das Austragungsband 24 zugeführt, wie in den Fig. 24 und 25 mit Pfeilen als Zuluftstrom S verdeutlicht ist.

Als weitere Ausgestaltung kann, wie ebenfalls in den Fig. 24 und 25 sowie auch 21 dargestellt ist, ferner vorgesehen sein, dass zusätzlich zu den Mitnahmezinken 27 auch Staubmitnehmer 35 an dem Austragungsband 24 vorgesehen sind. Beispielsweise ist jeder dritte Mitnahmezinken 27 durch einen Staubmitnehmer 35 z.B. aus Gummi ersetzt, wie bei dem Beispiel der Fig. 21 sowie 24 und 25 verdeutlicht ist. Die Staubmitnehmer 35 sind größen- und formmäßig an den Freiraum zwischen der Unterseite 29 des Austragungsbandes 24 und Kanalunterseite 30 des Entstaubungskanals 25 angepasst, haben eine geeignete Steifigkeit, sind aber nicht absolut starr. Durch die Staubmitnehmer 35 ist absaugtechnisch das Austragungsband 24 in mehrere in Bewegungsrichtung des letzteren, d.h. in Entstaubungsrichtung E geschlossene Sektoren unterteilt. Damit kann Zuluft gezielt von oben nach unten in Form von insbesondere sauberer Luft vorzugsweises aus der Umgebung (z.B. über ein Gebläse, das nicht dargestellt ist) in die geschlossenen, sich mit dem Austragungsband 24 mitbewegenden Sektoren geleitet werden. Die Staubmitnehmer 35 haben bei Kombination mit einer Absaugung also zwei Funktionen, und zwar neben dem physischen Mitnehmen von Staub u.dgl., so dass dieser durch die Lochbleche 31 fallen kann, auch eine Leitfunktion für Druckluft, um das Austreten von Staub u.dgl. durch die Lochbleche 31 weiter zu fördern und zu verbessern. Im Fall einer Verwendung von Druckluft verhindern die Staubmitnehmer 35 ferner das Einsaugen und Eintreten von Falschluft aus der Umgebung, die zudem auch wieder zusätzlichen Staub u.dgl. in das behandelte Material aus Heu, Stroh, Streu und/oder Futter samt anfänglich Sand, Lös, Lehm etc. eintragen, was eben durch diese Staubmitnehmer 35 wirksam verhindert wird.

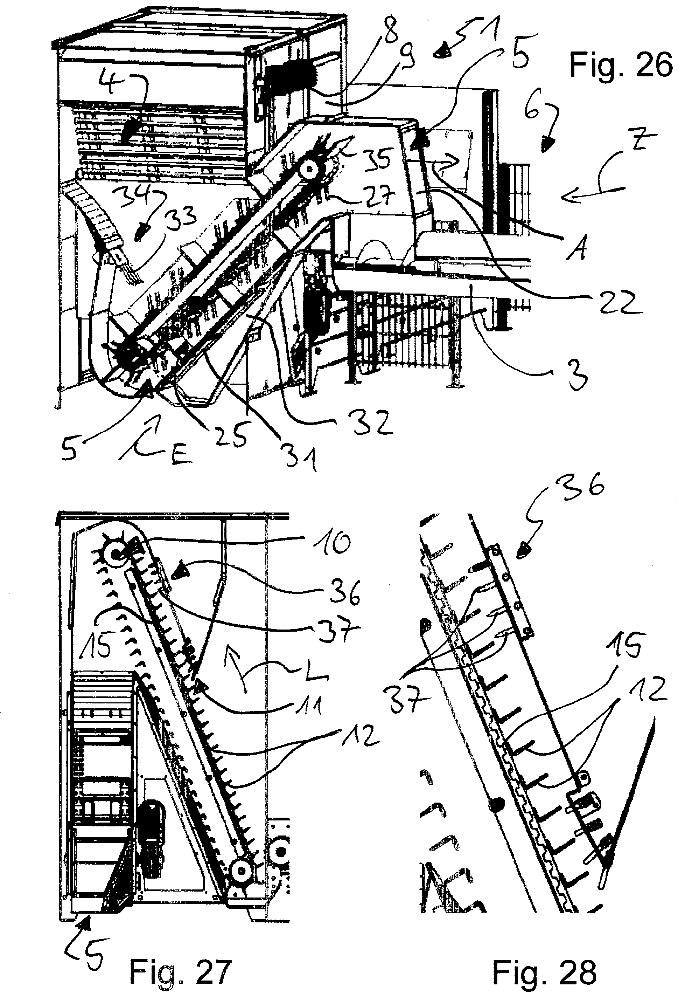

In der Fig. 26 ist in einer perspektivischen schematischen teilweise geöffneten Ansicht noch ein weiteres Ausführungsbeispiel eines Ballenauflösers 1 ähnlich zu dem in der Fig. 16 verdeutlichten weiteren Ausführungsbeispiel des Ballenauflösers 1 gezeigt, wobei weitere vorteilhafte und/oder bevorzugte Ausgestaltungen dazu in den Fig. 27 bis 33 schematisch dargestellt sind. Soweit dieses noch weitere Ausführungsbeispiel bezüglich Ausgestaltungen gemäß den Fig. 1 bis 15 sowie den Fig. 16 bis 25 identisch, ähnlich oder funktionsgleich ausgestaltet ist oder sein kann, wird darauf zur Vermeidung bloßer Wiederholungen nachfolgend verzichtet. Insbesondere auch anhand der Bezugszeichen in den Fig. 26 bis 33 sind die identischen, ähnlichen oder funktionsgleichen Komponenten aus den Fig. 1 bis 25 ohne weiteres zu identifizieren und dem Fachmann auch ohne Wiederholung von entsprechenden Beschreibungen zu den Fig. 1 bis 25 ohne weiteres verständlich, worauf für die Fig. 26 bis 33 hiermit explizit entsprechend und insbesondere mit fachmännischem Verständnis verwiesen wird.

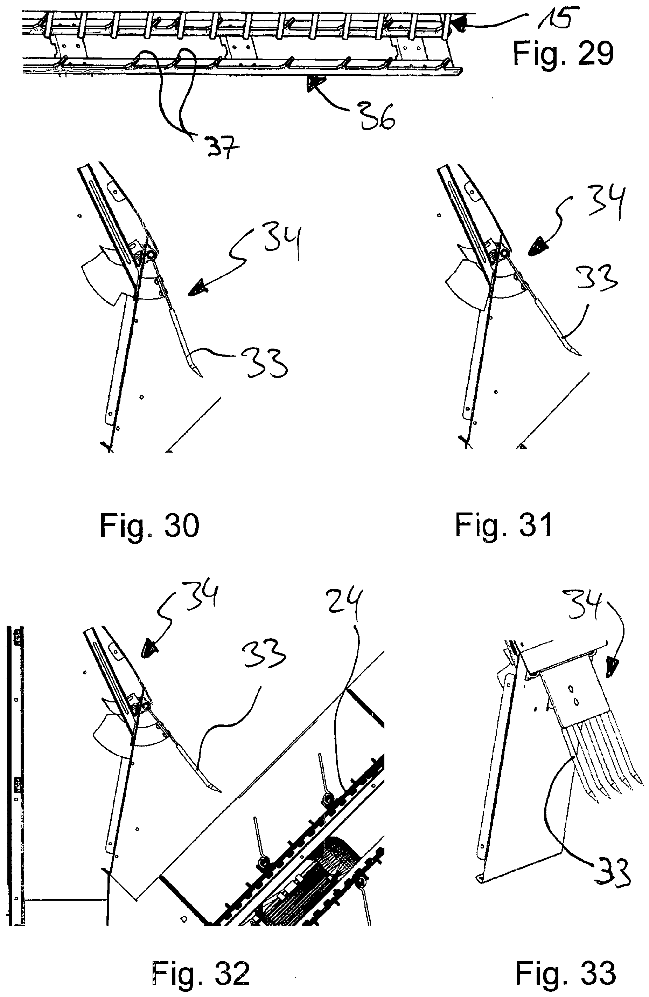

Eine spezifische Ausgestaltung bei dem noch weiteren Ausführungsbeispiel des Ballenauflösers 1 gemäß der Fig. 26 ist in den Fig. 27, 28 und 29 verdeutlicht. Oberhalb des sich in Auflöserichtung L bewegenden Teil der Auflösekette 15 sind statisch oder fix montierte Auflockerungseinrichtungen 36 in Form von beispielsweise Bolzen 37 geeignet angebracht, die dafür sorgen, dass von der Auflösekette 15 mitgenommene Klumpen von Heu, Stroh, Streu und/oder Futter samt Sand, Lös, Lehm etc., die daran vorbei transportiert werden, weiter zerkleinert werden und so das Auflösungsergebnis des Materials weiter verbessert wird. Solche Klumpen oder Stücke, Brocken oder Placken können am Materialeingang zu den Auflöseeinrichtungen 4, also an der Schnittstelle zwischen dem Förderband 14 der Zufuhreinrichtungen 6 und der Auflösekette 15 der Auflöseeinrichtungen 4 u.a. auch in Abhängigkeit von der lichten Höhe dieses Materialeingangs aus dem Ballen 2 herausgerissen werden und können das Auflöseergebnis negativ beeinflussen und auch verhindern, dass eine Staubabscheidung, wie sie im Zusammenhang mit dem weiteren Ausführungsbeispiel gemäß den Fig. 16 bis 25 gezeigt und beschrieben wurde und wie es auch beim nun behandelten noch weiteren Ausführungsbeispiel mit Vorteil und Vorzug samt Absaugung realisiert ist optimal wirksam erfolgen kann. Die Fig. 29 verdeutlicht die Anordnung, Ausgestaltung und Lage der Bolzen 38 in Bezug auf die Auflösekette 15 von deren Unterseite her.

Die Fig. 30 bis 33 verdeutlichen eine weitere spezifische Ausgestaltung bei dem noch weiteren Ausführungsbeispiel des Ballenauflösers 1. Die Fig. 30 und 31 zeigen jeweils schematisch den oder die schon im Zusammenhang mit dem weiteren Ausführungsbeispiel des Ballenauflösers 1 nach den Fig. 16 bis 25 erläuterten Austragsschalter 33 in einer betätigten Stellung (Fig. 30) und in einer unbetätigten Stellung (Fig. 31), wobei die schematisch Umstände der Betätigung des allgemein einen Ausgabefunktionssensors 34 darstellenden Austragsschalter 33 durch die Darstellung in der Fig. 32 deutlich werden. Der Austragsschalter 33 oder allgemein Ausgabefunktionssensor 34 sorgt bei den beiden Ausführungsbeispielen gemäß sowohl den Fig. 16 bis 25 als auch gemäß den Fig. 26 bis 33 dafür, dass ein Materialstau und/oder eine Funktionsstörung beim Austragungsband 24 verhindert oder behoben wird, indem verschiedene Aktionen in Abhängigkeit von dem Austragsschalter 33 in der betätigten Stellung oder allgemein einer Zustandsdetektion des Ausgabefunktionssensors 34 ausgelöst und durch die Steuerung 9 realisiert werden können. So kann beispielsweise das Austragungsband 24 angehalten und eventuell sogar temporär rückwärts, also entgegen der Entstaubungsrichtung E gesteuert werden. Auch die Auflösekette 15 kann angehalten und eventuell sogar temporär rückwärts, also entgegen der Auflöserichtung L gesteuert werden. Diese beiden Aktionen können insbesondere in aufeinander abgestimmten vorgebbaren oder vorgegebenen Routinen kombiniert werden, um eine Materialansammlung aufzulösen, die am unteren Ende des Austragungsbandes 24 aufgetreten sein kann und die Funktion des letzteren beeinträchtigen kann.

Ein Ausgabefunktionssensor 34 dient allgemein dazu, eine Funktionsstörung oder Beeinträchtigung des Austragungsbandes 24 und ggf. auch der Entstaubung infolge einer Überschreitung einer definierten Kraft auf das Austragungsband 24 zu vermeiden, wie auch jeder Auflösefunktionssensor 10 dazu dient, eine Funktionsstörung oder Beeinträchtigung der Auflösekette 15 infolge einer Überschreitung einer definierten Kraft auf letztere zu vermeiden und somit der Steuerung 9 Situationsinformationen zur Verfügung zu stellen, mittels denen diese Steuerung 9 dann die Zufuhreinrichtungen 6, die Auflöseeinrichtungen und/oder die Ausgabeeinrichtungen 5 geeignet steuert, um Beeinträchtigungen oder optimalerweise beginnende Beeinträchtigungen zu vermeiden oder zu beheben, worin der Kern der vorliegenden Erfindung besteht.

Wie auch schon aus den Fig. 30 bis 32 ersichtlich ist, zeigt die Fig. 33 noch im Detail die Ausgestaltung und insbesondere Formgebung des oder der Austragsschalter(s) 33. Durch die leicht abgewinkelte Form des oder der Austragsschalter(s) 33 wird ein eventuelles Zuviel an durch die Auflöseeinrichtungen 4 ausgelöstem und ggf. z.B. mit den Auflockerungseinrichtungen 36 aufgelockertem Heu, Stroh, Streu und/oder Futter samt Sand, Lös, Lehm etc., was dann volumenmäßig nicht in den Entstaubungskanal 25 passen würde, nach oben abgeleitet. Häuft sich dabei mehr als eine vorgegebene oder vorgebbare Menge an Material auf dem Austragsschalter 33 an, wird dieser durch das Gewicht dieses Materials nach unten gedrückt und ausgelöst, was wiederum der Steuerung 9 "mitgeteilt" wird, die dann insbesondere jedenfalls temporär das Nachfördern von Heu, Stroh, Streu und/oder Futter samt Sand, Lös, Lehm etc. stoppt, bis der Austragsschalter 33 wieder frei ist. Dadurch wird neben der Funktionssicherheit und einem störungsfreien Betrieb des Ballenauflösers 1 insgesamt erreicht, dass sich nur sehr lockeres Heu, Stroh, Streu und/oder Futter in dem Entstaubungskanal 25 befindet, was nicht nur das Endergebnis des letztlich ausgegebenen Endproduktes positiv beeinflusst, sondern auch eine optimale Entstaubung ermöglicht oder begünstig, weil sich bei solchem Material feiner, flüchtiger Staub u.dgl. optimal insbesondere absaugen lässt. Wäre das Heu, Stroh, Streu und/oder Futter samt Sand, Lös, Lehm etc. in dem Entstaubungskanal 25 verdichtet, wäre der Abreinigungseffekt schwächer.

Durch die erfindungsmäße Ausgestaltung, also die Steuereinrichtungen 9, die ausgelegt sind, die Zufuhrantriebseinrichtungen 7 und/oder die Auflöseantriebseinrichtungen 8 und/oder die Ausgabeeinrichtungen 5 so zu steuern, dass eine Fehlfunktion oder Störung, wie insbesondere ein Stau oder eine Verstopfung durch den Ballen 2 insbesondere an den Auflöseeinrichtungen 4 und/oder den Ausgabeeinrichtungen 5 vermieden oder behoben wird, wird erreicht, dass Heu, Stroh, Streu und/oder Futter schonend und ohne es selbst zu Staub oder bröselig zu zerkleinern aus dem Ballen 2 herausgelöst und als Streu- oder Futtermaterial geeignet zur Verfügung gestellt werden kann. Vorteilhafterweise kann gemäß der Variante mit Abscheidung und ggf. Absaugung bei dem aufgelockerten Heu, Stroh, Streu und/oder Futter ein unerwünschter Anteil von Sand, Lös, Lehm etc. einerseits im Endprodukt selbst und andererseits auch als Feinstaub in der Umgebungsluft, welcher Feinstaub normalerweise beim Arbeiten und Aufschütteln von Heu, Stroh, Streu und/oder Futter entsteht und als "Dunstglocke/Staubwolke" die Umgebungsluft verseucht, vermieden werden, was die Produktqualität erhöht und gleichzeitig die Arbeitsbedingungen bei der Bereitstellung dieses Endproduktes deutlich verbessert.

Folgende Merkmale sind vorteilhafte und mit Vorzug realisierte Ausgestaltungen und erreichbare Vorteile eines erfindungsgemäßen Ballenauflösers 1:
1. die Anordnung der einzelnen Bauteile insgesamt
2. die Form der Klingen der Austragungskette als Mitnehmer von "groben/schweren Staub
3. die Mitnahmezinken, um das geförderte Heu und Stroh locker zu transportieren
4. die Staubmitnehmer beispielsweise aus Gummi, um groben/schweren Staub zu transportieren und um eine gezielte Absaugung von oben nach unten (ca. 220 mm) zu ermöglichen
5. der Schalter des Austragungsbandes um eine Überfüllung des Austragungsbandes und damit die Verdichtung des abzureinigenden Materials zu verhindern
6. die Zuluftöffnung als solches und die Anordnung der Zuluftöffnung direkt über dem Rohmaterial

### Bezugszeichenliste

- 1: Ballenauflöser
- 2: Ballen aus Heu, Stroh, Streu und/oder Futter
- 3: Auflageeinrichtungen
- 4: Auflöseeinrichtungen
- 5: Ausgabeeinrichtungen
- 6: Zufuhreinrichtungen
- 7: Zufuhrantriebseinrichtungen
- 8: Auflöseantriebseinrichtungen
- 9: Steuereinrichtungen
- 10: Auflösefunktionssensor
- 11: Engpass
- 12: Mitnehmer
- 13: Träger
- 14: Förderband
- 15: Auflösekette
- 16: Antriebsmotor der Auflöseeinrichtungen
- 17: Frequenzumformer
- 18: Kanal
- 19: Gurte
- 20: U-Profile
- 21: Gurte
- 22: Ausgeber
- 23: Endwand
- 24: Austragungsband
- 25: Entstaubungskanal
- 26: Mitnahmeeinrichtungen
- 27: Mitnahmezinken
- 28: Austragsschnecke
- 29: Unterseite des Austragungsbandes 24
- 30: Kanalunterseite des Entstaubungskanals 25
- 31: Lochbleche
- 32: Sammelbehälter oder Staubbehälter
- 33: Austragsschalter
- 34: Ausgabefunktionssensor
- 35: Staubmitnehmer
- 36: Auflockerungseinrichtungen
- 37: Bolzen
- A: Ausgaberichtung
- E: Entstaubungsrichtung
- L: Auflöserichtung
- S: Zuluftstrom
- Z: Zuführrichtung

## Patentansprüche

1. Ballenauflöser (1) für einen Ballen (2) aus wenigstens einem der Materialien Heu, Stroh, Streu und Futter, mit Auflageeinrichtungen (3) für den Ballen (2) und Auflöseeinrichtungen (4), die ausgelegt sind, um das wenigstens eine der Materialien Heu, Stroh, Streu und Futter aus einem auf den Auflageeinrichtungen (3) bereitgestellten Ballen (2) herauszulösen und zu Ausgabeeinrichtungen (5) zu transportieren, die den Auflöseeinrichtungen (4) nachgeschaltet sind, wobei den Auflageeinrichtungen (3) Zufuhreinrichtungen (6) zum Zuführen eines auf den Auflageeinrichtungen (3) bereitgestellten Ballens (2) in einer Zuführrichtung (Z) zu den Auflöseeinrichtungen (4) hin zugeordnet sind und wobei ferner Zufuhrantriebseinrichtungen (7) zum Antreiben der Zufuhreinrichtungen (6) und Auflöseantriebseinrichtungen (8) zum Antreiben der Auflöseeinrichtungen (4) vorgesehen sind, wobei wenigstens einer der Zufuhrantriebseinrichtungen (7), Auflöseantriebseinrichtungen (8) und Ausgabeeinrichtungen (5) Steuereinrichtungen (9) zugeordnet sind, die ausgelegt sind, wenigstens eine der Zufuhrantriebseinrichtungen (7), Auflöseantriebseinrichtungen (8) und Ausgabeeinrichtungen (5) so zu steuern, dass eine Fehlfunktion oder Störung, wie insbesondere ein Stau oder eine Verstopfung durch den Ballen (2) an wenigstens einer der Auflöseeinrichtungen (4) und Ausgabeeinrichtungen (5), vermieden oder behoben wird,
**dadurch gekennzeichnet,**
**dass** die Steuereinrichtungen (9) ausgelegt sind, die Zufuhrantriebseinrichtungen (7), insbesondere in Abhängigkeit von wenigstens einem vorgegebenen Detektionsergebnis von mindestens einem Auflösefunktionssensor (10) oder von mindestens einem Ausgabefunktionssensor (34), das auf eine Fehlfunktion oder Störung oder eine sich anbahnende Fehlfunktion oder Störung durch den Ballen (2) an den Auflöseeinrichtungen (4) oder an den Ausgabeeinrichtungen (5) schließen lässt, so zu steuern, dass der Ballen (2) oder schon zerkleinertes Material zeitweise entgegen der Zuführrichtung (Z) von den Auflöseeinrichtungen (4) oder entgegen einer Entstaubungsrichtung (E) weg bewegt wird.

2. Ballenauflöser (1) nach Anspruch 1, **dadurch gekennzeichnet, dass** den Steuereinrichtungen (9) mindestens ein Auflösefunktionssensor (10) an den Auflöseantriebseinrichtungen (8) oder ein Ausgabefunktionssensor (34) den Ausgabeeinrichtungen (5) zugeordnet ist und die Steuereinrichtungen (9) ausgelegt sind, wenigstens eine von den_Zufuhrantriebseinrichtungen (7) und den Auflöseantriebseinrichtungen (8) in Abhängigkeit von wenigstens einem vorgegebenen Detektionsergebnis des mindestens einen Auflösefunktionssensors (10) oder des mindestens einen Ausgabefunktionssensors (34), das auf eine Fehlfunktion oder Störung oder eine sich anbahnende Fehlfunktion oder Störung durch den Ballen (2) an den Auflöseeinrichtungen (4) oder an den Ausgabeeinrichtungen (5) schließen lässt, so zu steuern, dass der Fehlfunktion oder Störung zweitweise entgegengewirkt wird, wobei insbesondere jeder Auflösefunktionssensor (10) und Ausgabefunktionssensor (34) vorzugsweise ein Drehmomentsensor, ein Bewegungssensor, ein Temperatursensor, ein Strom- oder Spannungssensor oder ein Schalter ist.

3. Ballenauflöser (1) nach einem der vorhergehenden Ansprüche, **dadurch gekennzeichnet, dass** den Ausgabeeinrichtungen (5) bezogen auf die Zuführrichtung (Z) ein Engpass (11) vorgeschaltet ist, der vorzugsweise durch die Auflöseeinrichtungen (4) gebildet oder den Auflöseeinrichtungen (4) zugeordnet und vorzugsweise vorgeschaltet ist.

4. Ballenauflöser (1) nach einem der vorhergehenden Ansprüche, **dadurch gekennzeichnet, dass** die Auflöseeinrichtungen (4) Auflockerungseinrichtungen (36) vorzugsweise insbesondere im Bereich des Engpasses (11) zum Zerkleinern von aus dem Ballen (2) ausgelösten Klumpen, Stücken, Brocken oder Placken enthalten.

5. Ballenauflöser (1) nach einem der vorhergehenden Ansprüche, **dadurch gekennzeichnet, dass** die Auflöseeinrichtungen (4) messer-, klingen-, haken-, kamm- oder stabförmige Mitnehmer (12) enthalten, von denen mehrere an einem gemeinsamen stabförmigen Träger (13) angebracht und vorzugsweise integral ausgebildet sind.

6. Ballenauflöser (1) nach einem der vorhergehenden Ansprüche, **dadurch gekennzeichnet, dass** die Ausgabeeinrichtungen (5) Entstaubungseinrichtungen, vorzugsweise einen Entstaubungskanal (25) enthalten, der bevorzugt an seiner Kanalunterseite (29) zumindest ein Lochblech (31) enthält, durch das unerwünschtes Material, wie Sand, Lös, Lehm etc. abgeschieden wird und in dem ein Austragungsband (24) der Ausgabeeinrichtungen (5) verläuft.

7. Ballenauflöser (1) nach einem der vorhergehenden Ansprüche, **dadurch gekennzeichnet, dass** ein Austragungsband (24) der Ausgabeeinrichtungen (5) als Mitnehmeinrichtungen (26) neben Mitnahmezinken (27) auch Staubmitnehmer (35) aufweist und bevorzugt den Ausgabeeinrichtungen (5) Einrichtungen zugeordnet sind, mittels denen ein Luftstrom vorzugsweise quer zur Entstaubungsrichtung (E) von einem Austragungsband (24) der Ausgabeeinrichtungen (5) zu dem wenigstens einen Lochblech (31) des Entstaubungskanals (25) erzeugt wird, um Sand, Lös, Lehm etc. aus dem wenigstens einem der Materialien Heu, Stroh, Streu und Futter durch das Lochblech (31) aus dem Entstaubungskanal (25) zu entfernen .

8. Ballenauflöseverfahren, bei dem ein Ballen (2) aus wenigstens einem der Materialien Heu, Stroh, Streu und Futter auf Auflageeinrichtungen (3) mittels deren von Zufuhrantriebseinrichtungen (7) angetriebenen Zufuhreinrichtungen (6) zu von Auflöseantriebseinrichtungen (8) angetriebenen Auflöseeinrichtungen (4) transportiert wird, das wenigstens eine der Materialien Heu, Stroh, Streu und/oder Futter aus dem Ballen (2) herauslösen und zu Ausgabeeinrichtungen (5) transportieren, wobei wenigstens eine der Zufuhrantriebseinrichtungen (7), Auflöseantriebseinrichtungen (8) und Ausgabeeinrichtungen (5) mittels Steuereinrichtungen (9) so gesteuert werden, dass eine Fehlfunktion oder Störung, insbesondere ein Stau oder eine Verstopfung durch den Ballen (2) an wenigstens einer der Auflöseeinrichtungen (4) und Ausgabeeinrichtungen (5), vermieden oder behoben wird,
**dadurch gekennzeichnet,**
**dass** die Steuereinrichtungen (9) ausgelegt sind, die Zufuhrantriebseinrichtungen (7), insbesondere in Abhängigkeit von wenigstens einem vorgegebenen Detektionsergebnis von mindestens einem Auflösefunktionssensor (10) oder von mindestens einem Ausgabefunktionssensor (34), das auf eine Fehlfunktion oder Störung oder eine sich anbahnende Fehlfunktion oder Störung durch den Ballen (2) an den Auflöseeinrichtungen (4) oder an den Ausgabeeinrichtungen (5) schließen lässt, so zu steuern, dass der Ballen (2) oder schon zerkleinertes Material zeitweise entgegen der Zuführrichtung (Z) von den Auflöseeinrichtungen (4) oder entgegen einer Entstaubungsrichtung (E) weg bewegt wird.

9. Ballenauflöseverfahren nach Anspruch 8, **dadurch gekennzeichnet, dass** ein Ballenauflöser (1) nach den Ansprüchen 2 bis 7 bestimmungsgemäß betrieben wird.

## Claims

1. A bale breaker (1) for a bale (2) made of at least one of the materials hay, straw, bedding, and fodder, with support means (3) for the bale (2) and breaking means (4) designed to remove the at least one of the materials hay, straw, bedding, and fodder from a bale (2) provided on the support means (3) and to transport it to output means (5) arranged downstream of the breaking means (4), wherein the support means (3) are assigned feeding means (6) for feeding a bale (2) provided on the support means (3) in a feed direction (Z) toward the breaking means (4), and wherein feeding drive means (7) for driving the feeding means (6) and breaking drive means (8) for driving the breaking means (4) are further provided, wherein at least one of the feeding drive means (7), breaking drive means (8), and output means (5) are assigned control means (9) which are designed to control at least one of the feeding drive means (7), breaking drive means (8) and output means (5) in such a way that a malfunction or disturbance, such as in particular a jam or blockage by the bale (2) at at least one of the breaking means (4) and output means (5), is avoided or remedied,
**characterized in that**
the control means (9) are designed to control the feeding drive means (7), in particular depending on at least one predetermined detection result from at least one breaking function sensor (10) or from at least one output function sensor (34), which indicates a malfunction or disturbance or an impending malfunction or disturbance by the bale (2) at the breaking means (4) or at the output means (5), in such a way that the bale (2) or already shredded material is temporarily moved away from the breaking means (4) against the feed direction (Z) or a dedusting direction (E).

2. Bale breaker (1) according to claim 1, **characterized in that** at least one breaking function sensor (10) on the breaking drive means (8) or an output function sensor (34) on the output means (5) is assigned to the control means (9), and the control means (9) are designed to control at least one of the feeding drive means (7) and the breaking drive means (8) depending on at least one predetermined detection result of the at least one breaking function sensor (10) or the at least one output function sensor (34), which indicates a malfunction or disturbance or an impending malfunction or disturbance caused by the bale (2) on the breaking means (4) or on the output means (5), in such a way that the malfunction or disturbance is temporarily counteracted, wherein in particular each breaking function sensor (10) and output function sensor (34) preferably is a torque sensor, a motion sensor, a temperature sensor, a current or voltage sensor, or a switch.

3. Bale breaker (1) according to one of the preceding claims, **characterized in that** with respect to the feed direction (Z) there is arranged upstream of the output means (5) a bottleneck (11), which is preferably formed by the breaking means (4) or is associated with the breaking means (4) and is preferably arranged upstream.

4. Bale breaker (1) according to one of the preceding claims, **characterized in that** the breaking means (4) contain loosening means (36), preferably in particular in the region of the bottleneck (11), for comminuting clumps, pieces, chunks, or lumps removed from the bale (2).

5. Bale breaker (1) according to one of the preceding claims, **characterized in that** the breaking means (4) comprise knife-, blade-, hook-, comb-, or rod-shaped drivers (12), several of which are attached to a common rod-shaped support (13) and are preferably integrally formed.

6. Bale breaker (1) according to one of the preceding claims, **characterized in that** the discharge means (5) comprise dedusting means, preferably a dedusting channel (25), which preferably contains on its channel bottom side (29) at least one perforated plate (31) through which unwanted material, such as sand, loam, clay, etc., is separated and in which a discharge belt (24) of the discharge means (5) runs.

7. Bale breaker (1) according to one of the preceding claims, **characterized in that** a discharge belt (24) of the output means (5) has, as entraining devices (26), in addition to entraining tines (27), also dust drivers (35), and preferably the output means (5) are assigned means by means of which an air flow is generated, preferably transversely to the dedusting direction (E), from a discharge belt (24) of the output means (5) to the at least one perforated plate (31) of the dedusting channel (25), in order to remove sand, loam, clay, etc. from the at least one of the materials hay, straw, bedding, and fodder through the perforated plate (31) from the dedusting channel (25).

8. Bale breaking method, in which a bale (2) made of at least one of the materials hay, straw, bedding, and fodder is transported on support means (3) by means of their feeding means (6) driven by feeding drive means (7) to breaking means (4) driven by breaking drive means (8), which separate at least one of the materials hay, straw, bedding, and/or fodder from the bale (2) and transport it to output means (5), wherein at least one of the feeding drive means (7), breaking drive means (8), and output means (5) is controlled by control means (9) such that a malfunction or disturbance, such as a jam or blockage by the bale (2), at at least one of the breaking means (4) and output means (5) is avoided or remedied,
**characterized in that**
the control means (9) are designed to control the feeding drive means (7), in particular depending on at least one predetermined detection result from at least one breaking function sensor (10) or from at least one output function sensor (34), which indicates a malfunction or disturbance or an impending malfunction or disturbance caused by the bale (2) at the breaking means (4) or at the output means (5), in such a way that the bale (2) or already shredded material is temporarily moved away from the breaking means (4) counter to the feed direction (Z) or counter to a dedusting direction (E).

9. Bale breaking method according to claim 8, **characterized in that** a bale breaker (1) according to claims 2 to 7 is operated as intended.

## Revendications

1. Dérouleur de ballese (1) pour balle (2) constituée d'au moins un matériau parmi le foin, la paille, la litière et le fourrage, comprenant des dispositifs de support (3) pour la balle (2) et des dispositifs de déroulement (4) destinés à prélever au moins un matériau parmi le foin, la paille, la litière et le fourrage d'une balle (2) disposée sur les dispositifs de support (3) et pour la transporter vers des dispositifs de sortie (5) disposés en aval des dispositifs de déroulement (4), cependant aux dispositifs de support (3) sont associés des dispositifs d'alimentation (6) destinés à alimenter une balle (2) disposée sur les dispositifs de support (3) dans une direction d'alimentation (Z) vers les dispositifs de déroulement (4) , et des dispositifs d'entraînement d'alimentation (7) destinés à entraîner les dispositifs d'alimentation (6) et des dispositifs d'entraînement de déroulement (8) destinés à entraîner les dispositifs de déroulement (4) sont également prévus, cependant au moins l'un des dispositifs d'entraînement d'alimentation (7), dispositifs de déroulement (8) et dispositifs de sortie (5) est associé des dispositifs de commande (9) conçus pour commander au moins l'un des dispositifs d'entraînement, dispositifs d'alimentation (7) et dispositifs de déroulement. (8) et les dispositifs de sortie (5) de manière à éviter ou à remédier à un dysfonctionnement ou à une perturbation, tel que notamment de préférence un bourrage ou un blocage par la balle (2) au niveau d'au moins l'un des dispositifs de déroulement (4) et des dispositifs de sortie (5),
**caractérisé en ce que**
les dispositifs de commande (9) sont destinés pour commander les dispositifs d'entraînement d'alimentation (7), notamment de préférence en fonction d'au moins un résultat de détection prédéterminé provenant d'au moins un capteur de fonction de déroulement (10) ou d'au moins un capteur de fonction de sortie (34), qui indique un dysfonctionnement, une perturbation ou un risque de dysfonctionnement ou de perturbation de la balle (2) au niveau des dispositifs de déroulement (4) ou des dispositifs de sortie (5), de manière à éloigner temporairement la balle (2) ou le matériau déjà broyé depuis les dispositifs de déroulement (4) dans le sens inverse de le sens de l'alimentation (Z) ou le sens de l'évacuation de la poussière (E).

2. Dérouleur de ballese (1) selon la revendication 1, **caractérisé en ce qu'**au moins un capteur de fonction de déroulement (10) sur les dispositifs d'entraînement de déroulement (8) ou un capteur de fonction de sortie (34) sur les dispositifs de sortie (5) est associé aux dispositifs de commande (9), et les dispositifs de commande (9) sont conçus pour commander au moins l'un des dispositifs d'entraînement d'alimentation (7) et de déroulement (8) en fonction d'au moins un résultat de détection prédéterminé du ou des capteurs de fonction de déroulement (10) ou du ou des capteurs de fonction de sortie (34), indiquant un dysfonctionnement ou une perturbation, ou un risque de dysfonctionnement ou de perturbation, causé par la balle (2) sur les dispositifs de déroulement (4) ou sur les dispositifs de sortie (5), de manière à neutraliser temporairement le dysfonctionnement ou la perturbation, chaque capteur de fonction de déroulement (10) et capteur de fonction de sortie (34) comporte notamment de préférence un capteur de couple, un capteur de mouvement, un capteur de température, un capteur de courant ou de tension, ou un interrupteur.

3. Dérouleur de ballese (1) selon l'une des revendications précédentes, **caractérisé en ce qu'**un goulot d'étranglement (11) est disposé en amont des dispositifs de sortie (5) par rapport à la direction d'alimentation (Z), ce goulot est de préférence formé par les dispositifs de déroulement (4) ou associé à ces derniers et est de préférence disposé en amont.

4. Dérouleur de ballese (1) selon l'une des revendications précédentes, **caractérisé en ce que** les dispositifs de déroulement (4) comportent des dispositifs de desserrage (36), de préférence notamment au niveau du goulot d'étranglement (11), pour le broyage des grumeaux, des morceaux, des bribes ou des mottes extraits de la balle (2).

5. Dérouleur de ballese (1) selon l'une des revendications précédentes, **caractérisé en ce que** les dispositifs de déroulement (4) comprennent des dispositifs d'entraînement (12) en forme de couteau, de lame, de crochet, de peigne ou de tige, dont plusieurs sont fixés à un support commun en forme de tige (13) et sont de préférence monoblocs.

6. Dérouleur de ballese (1) selon l'une des revendications précédentes, **caractérisé en ce que** les dispositifs d'évacuation (5) comprennent des dispositifs de dépoussiérage, de préférence un canal d'évacuation (25), qui comporte de préférence au moins une plaque perforée (31) sur son fond des canal (29) à travers laquelle les matières indésirables, telles que le sable, le limon, l'argile, etc., sont séparées et dans laquelle passe une bande d'évacuation (24) des dispositifs d'évacuation (5).

7. Dérouleur de ballese (1) selon l'une des revendications précédentes, **caractérisé en ce que** une bande d'évacuation (24) des dispositifs de sortie (5) comporte, comme dispositifs d'entraînement (26), outre des dents d'entraînement (27), des chasse-poussière (35), et de préférence, les dispositifs de sortie (5) sont associés à des dispositifs permettant de générer un flux d'air, de préférence transversal à la direction de dépoussiérage (E), depuis la bande d'évacuation (24) des dispositifs de sortie (5) vers au moins une plaque perforée (31) du canal de dépoussiérage (25), afin d'éliminer le sable, le limon, l'argile, etc. des matériaux foin, paille, litière et fourrage à travers la plaque perforée (31) du canal de dépoussiérage (25).

8. Procédé de déroulage de balles, dans lequel une balle (2) composée d'au moins un matériau parmi le foin, la paille, la litière et le fourrage est transportée sur des dispositifs de support (3) par l'intermédiaire de leurs dispositifs d'alimentation (6) entraînés par des dispositifs d'entraînement d'alimentation (7) vers des dispositifs de déroulement (4) entraînés par des dispositifs d'entraînement de déroulement (8), lesquels séparent au moins un matériau parmi le foin, la paille, la litière et/ou le fourrage de la balle (2) et la transportent vers des dispositifs de sortie (5), cependant au moins un des dispositifs d'entraînement d'alimentation (7), dispositifs de déroulement (8) et dispositifs de sortie (5) est commandé par des dispositifs de commande (9) de manière à éviter ou à remédier à un dysfonctionnement ou une perturbation, tel qu'un bourrage ou un blocage de la balle (2), au niveau d'au moins l'un des dispositifs de déroulement (4) et dispositifs de sortie (5),
**caractérisé en ce que**
les dispositifs de commande (9) sont conçus pour commander les dispositifs d'entraînement d'alimentation (7), notamment en fonction d'au moins un résultat de détection prédéterminé provenant d'au moins un capteur de fonction de déroulement (10) ou d'au moins un capteur de fonction de sortie. (34), qui signale un dysfonctionnement ou une perturbation, ou un risque de dysfonctionnement ou de perturbation, causé par la balle (2) au niveau des dispositifs de déroulement (4) ou des dispositifs de sortie (5), de telle sorte que la balle (2) ou le matériau déjà déchiqueté est temporairement éloigné des dispositifs de déroulement (4) dans le sens inverse de l'alimentation (Z) ou du dépoussiérage (E).

9. Procédé de déroulage de balles selon la revendication 8, **caractérisé en ce qu'**un dérouleur de balleses (1) selon les revendications 2 à 7 est utilisé conformément à sa destination.
